# EUROPEAN PATENT SPECIFICATION

(11) **EP 1 604 280 B1**
(45) Date of publication and mention of the grant of the patent: **04.07.2012**
(21) Application number: 04721568.6
(22) Date of filing: 18.03.2004
(51) Int. Cl.: G06F 9/46

(54) **FLEXIBLE MULTI-AGENT SYSTEM ARCHITECTURE**
FLEXIBLE MEHRAGENT-SYSTEMARCHITEKTUR
ARCHITECTURE SOUPLE DE SYSTEME A AGENTS MULTIPLES

(30) Priority: 19.03.2003 GB 0306294; 16.04.2003 GB 0308840
(43) Date of publication of application: 14.12.2005
(73) Proprietor: BRITISH TELECOMMUNICATIONS public limited company, London Greater London EC1A 7AJ (GB)
(72) Inventor: LEE, Habin, Suffolk IP4 3LJ (GB); SHEPHERDSON, John William, Suffolk CO10 1LA (GB); MIHAILESCU, Patrik, Frankston, VIC 3199 (AU)
(74) Representative: Brinck, Coreena Fiona Anne
(86) International application number: PCT/GB2004/001168
(87) International publication number: WO 2004/084068

(56) References cited:
- WO-A-02/075651
- US-A1- 2003 004 912
- QIMING CHEN, MEICHUN HSU, UMESHWAR DAYAL, MARTIN GRISS: "Multi-Agent Cooperation, Dynamic Workflow and XML for E-Commerce Automation" HPL-1999-136, [Online] October 1999 (1999-10), pages 1-10, XP002264058 Retrieved from the Internet: <URL:http://www.hpl.hp.com/techreports/199 9/HPL-1999-136.pdf> [retrieved on 2003-12-05]
- LISA CINGISER DIPIPPO, VICTOR FAY-WOLFE,LEKSHMI NAIR, ETHAN HODYS: "A Real-Time Multi-Agent System Architecture for E-Commerce Applications" FIFTH INTERNATIONAL SYMPOSYUM ON AUTONOMOUS DECENTRALIZED SYSTEMS, [Online] 26 - 28 March 2001, page 1-13 XP002264059 Dallas, Texas Retrieved from the Internet: <URL:http://csdl.computer.org/dl/proceedin gs/isads/2001/1065/00/10650357.pdf> [retrieved on 2003-12-05]

## Description

The present invention relates to a multi-agent system (MAS) architecture, in particular to a multi-agent system architecture which is suitable for Open Electronic Commerce. The invention further relates to a method of, and a mediator agent for, providing generic role components to other agents in the MAS.

Software agent technology is widely used in a variety of applications ranging from comparatively small systems such as personalised electronic mail filters to large, complex, and mission-critical systems such as air-traffic control. Multi-Agent Systems (MASs) are designed and implemented using multiple software agents that interact via messages to achieve a goal. MASs are used in the field of information service provision where information service providers are highly competitive and it is very advantageous if they can differentiate their products by providing new kinds of interactions amongst information customers.

In a MAS, each agent has incomplete information or a limited capability for solving a problem. Therefore an agent must interact with other agents autonomously. A MAS can be differentiated from existing distributed object systems in that each agent autonomously detects and solves a problem using its reasoning facility minimising the human user's intervention.

One of the main MAS principles concerns the separation of service provision and service requests amongst the distributed agents. If one agent cannot perform a task, it adopts the role of a client agent and requests assistance from another agent (acting in the role of server agent) which satisfies the request by executing the required service.

Currently, interactions among multiple agents are affected by certain limitations of known MASs. These limitations include interoperability issues among heterogeneous agents, the semantics of the agent communication language (ACL) used which specifies the standard agent message structures, the allocation of tasks among participant agents, and the building of conversation policies (or interaction protocols (IPs)) etc. (For more details see Mamadou T. Kone, Akira Shimazu and Tatsuo Nakajima, "The state of the art in agent communication languages", in Knowledge and Information Systems (2000) 2: 259-284; and Jennings, N. R., Sycara, K., and Wooldridge, M., "A roadmap of agent research and development", Autonomous Agents and Multi-Agent Systems, 1, 275-306, 1998.

Interoperability is mainly concerned with enabling different agents to communicate with each other by using a standard agent communication language (ACL) and interaction protocols etc. lnteroperability involves several areas of research such as ontology, content language, and ACL. Ontologies provide common representations of knowledge for specific domains where agent communication occurs. Content languages are standard expressions of domain-independent knowledge that are used together with ontologies to specify the content part of agent messages.

Whilst interoperability is not an issue when all agents within the same platform use a predefined language, ontology, and interaction protocols to compose an ACL, this situation is unrealistic in an electronic commerce environment where new agents are dynamically introduced with new services.

FIPA (The Foundation for Intelligent Physical Agents) aims to produce standards for the interoperation of heterogeneous software agents. FIPA has developed the FIPA Abstract Architecture Specification which specifies the standard architecture that heterogeneous agent platforms should comply with to be able to communicate each other.

According to the FIPA Abstract Architecture Specification (for more details see FIPA Specifications, Foundation for Intelligent Physical Agents, 2000, http://www.fipa.org/repository/index.html), a server agent should register its services with a Directory Facilitator (DF) and client agents should contact the DF to find an appropriate server agent that provides the required services. The client agent creates a service description that contains the service name, type, protocol, ontology, and content language to be used for the service and uses the service description to query the DF to find suitable server agents. However, the FIPA abstract architecture specification is limited in that a client agent is only able to request services which are already known to it (for example, see Steven Wilmott, Jonathan Dale, Bernard Burg, Patricia Charton and Paul O'Brien, "Agentcities: A Worldwide Open Agent Network", Agentlink News, No. 8, Nov. 2001, available at http://www.AgentLink.org/newsletter/8/AL-8.pdf, for more details). Moreover, whilst the FIPA abstract architecture addresses the issue of providing a mechanism that allows interoperability between agents in a variety of heterogeneous platforms by using a standard message structure or content language, ontology, and interaction protocol (these standards can also be used within the same platform), the FIPA standards do not specify how existing agents can handle messages which include a new content language and/or ontology, and/or interaction protocol even if they reside on the same platform.

Another issue relevant when considering interoperability is the conversation policy to be used for a multi-agent interaction. Conversation policies, also called interaction protocols, are predefined sequences of agent messages that guide and constrain agent communications for specific objectives. They are essential in complicated agent conversations that involve a lot of messages and many possible branches of logic and have been the subject of research by several parties. For example, see the earlier reference by Mamandou as well as Ren'ee Elio and Afsaneh Haddadi, "On abstract task models and conversation policies", in Working Notes of the Workshop on Specifying and Implementing Conversation Policies, pages 89--98, Seattle, Washington, May 1999; M. Greaves, H. Holmback, and J. Bradshaw, "What is a conversation policy? ", in Proc. The Workshop on Specifying and Implementing Conversation Policies, Seattle, Washington, May 1999, pp. 118-131; Scott A. Moore, "On conversation policies and the need for exceptions", in Working Notes of the Workshop on Specifying and Implementing Conversation Policies, Seattle, Washington, May 1999; and Jeremy Pitt and Abe Mamdani, "Communication protocols in multi-agent systems", In Working Notes of the Workshop on Specifying and Implementing Conversation Policies, pages 39--48, Seattle, Washington, May 1999.

Without a conversational policy, interoperability may not be achieved between agents as each individual agent will find in each communication step of the interaction that they may need to select a message type to use to communicate, and each agent may select a different message type to use, based on their own understanding and implementation of the ACL semantics. It therefore is generally advisable to use conversation policies in all non-trivial conversations.

One of the limitations of known MASs is that agents only use a set of known or standard conversation policies and cannot handle ad-hoc conversation policies without re-implementation. The need for ad-hoc conversation policies is clear in information-centric agents in e-markets that are characterized by their focus on collecting, processing, analysing, and monitoring information.

Information-centric agents, also referred to herein simply as information agents, can be defined as a class of autonomous agents that are closely related with information sources (for more details see K. Decker, A. Pannu, K. Sycara, and M. Williamson, "Designing behaviors for information agents", in Proc. The First International Conference on Autonomous Agents (AGENTS-97), Feb. 1997, pp. 404-412). For these reasons, conversations with information agents can be dependent on the nature of information sources. As information sources range from legacy systems to web sites, etc, it is not feasible to assume that in the future they will be accessible by only a few standard conversation policies. Even now, it has been said that existing conversation policies are not extensive enough to support all applications and systems (see, for example, the above reference by Moore). New policies will need to be implemented and present policies upgraded in the future. A conversation policy handshaking mechanism to allow agents to exchange ad-hoc conversation policies and interact after interpretation of the new conversation policy on the fly is already known in the art from Hyung Jun Ahn, Habin Lee, Hongsoon Yim, Sung Joo Park, "Handshaking Mechanism for Conversation Policy Agreements in Dynamic Agent Environment," First International Joint Conference on Autonomous Agents and Multi-Agent Systems (AAMAS 2002*).* However, this ad-hoc interaction protocol is not able to handle messages with unknown languages and ontologies.

A service component concept for MAS has been adopted in the European 5^{th} Framework project LEAP (Lightweight Extensible Agent Platform) (see LEAP Project website, http://leap.crm-paris.com). In the LEAP project, a Generic Service Component (GSC) construct was designed, and 22 specializations of it, covering three application areas (that is, knowledge management, travel management, and decentralised work co-ordination management) were produced (a subset of which were actually implemented) to be used in a wide variety of applications. However, whilst the main objective of a LEAP GSC is to provide generic service components which can be reused in similar applications, the GSC construct developed in the LEAP project is a static library that is only used when agents are developed, and which must be present when they are launched on an agent platform. Consequently, the generic service components proposed by LEAP cannot be dynamically installed on to agents which are already running.

In electronic commerce (eCommerce), MASs are considered to play a major role (see for example, Maes, Pattie, Guttman, R. H., and Moukas, A. G. "Agents That Buy and Sell", Communication of the ACM, Vol. 42, No. 3, pp.81-91, 1999). In eCommerce, autonomous agents can act on behalf of their human users to buy or sell products or services and the openness and flexibility of the MAS will affect its success. The eCommerce environment is dynamic in that new consumers and merchants may appear, new products and services can be introduced frequently, and sometimes the standard languages and transaction rules can be changed. As a result, any MAS implemented in an eCommerce environment needs to be flexible enough to adapt to these frequent changes in an eMarket settings. More specifically, a MAS for eCommerce should enable agents to participate, disengage, and/or transact with each other using new business rules (subject to some minimum constraints) whenever these new rules arise.

In order for a known MAS to become sufficiently open and flexible for an eCommerce environment, all participating agents would be required to use the same content languages, ontologies, and interaction protocols in the messages they exchange. This is unrealistic to achieve using known MASs as this prerequisite makes it impossible for agents providing new services based on a new interaction protocol, ontology, or content language to participate in any existing MAS-based markets. To accommodate such an agent, the MAS would have to be re-engineered to allow existing agents to use the new content language, ontology, or interaction protocol to request and receive service from the new agent.

"Multi-agent co-operation, dynamic workflow and XML for e-commerce automation" by Qiming Chen et al, AGENTS 2000, Proceedings of the 4th International Conference on Autonomous Agents, June 3-7, 2000, Barcelona, Spain, ACM, 2000, describes a Java based dynamic agent infrastructure for e-commerce automation, which supports dynamic behaviour modification of agents and which enables ad-hoc conversations and dynamic co-operation of agents to enable commerce mediating businesses to be supported. The dynamic behaviour modification of agents is achieved by the installation and execution of Java classes providing agent behaviours on the fly within an agent. However, for each workflow model (equivalently for a conversation policy), two centralised agents (a Process Manager and a Worklist Manager) need to be instantiated.

The present invention seeks to obviate and/or mitigate the above problems and disadvantages known in the art by providing a multi-agent system architecture which provides sufficiently flexibility to support an evolving eCommerce environment, and in which all the controls and state changes are implemented using role components. Advantageously, by using role components, no specialised agents are required to be instantiated for each new conversation policy/interaction policy.

A first aspect of the invention seeks to provide a service component arranged for use in a multi-agent system comprising agents having predefined service mediator, service consumer and service provider roles, the service component enabling a service consumer agent of said multi-agent system to interact with a service provider agent when requesting a service, the service component comprising: a plurality of role components arranged to perform a service interaction between the service consumer agent and said service provider agent, at least one of said plurality of role components comprising a Initiator role component previously registered by a service provider agent with a service mediator agent and arranged to be loaded on to said service consumer agent and at least one of said plurality of role components comprising a respondent role component arranged to be loaded on to a service provider agent as appropriate for the interaction with said service consumer agent, the loaded role components being arranged to provide the service consumer and service provider agents with information on one or more interaction requirements to enable the requested service to be provided, wherein said Initiator role component is loaded by said service consumer agent from a mediator agent identified through the use of a description of the service component, the mediator agent dynamically providing the Initiator role to the service consumer agent, whereby once an Initiator role component is loaded from the mediator agent, the service consumer agent is directly able to request the service from an available service provider agent identified by the by the downloaded Initiator role component when the service consumer agent executes it to get a service result.

Preferably, the role components are attached with a component description, the component description including details of the minimum client platform capability of the client agent and the interfaces used by the client agent to Interact with the role component.

Preferably, the Initiator role component can control its state and can be reused for multiple requests.

Preferably, the role components are distributed by a mediator agent.

Preferably, the mediator agent provides the role components dynamically to the client and server agents.

More preferably, the mediator agent identifies a suitable role component using a service description and component description of the role component.

Preferably, one of said plurality of role components is an Initiator role component provided dynamically to the client agent whilst the client agent is running.

Preferably, one of said plurality of role components is a Respondent role component provided dynamically to the server agent whilst the server agent is running.

Another aspect of the invention relates to a multi-agent service architecture comprising one or more service components according to the first aspect.

Another aspect of the invention relates to an agent internal architecture for dynamically instating and executing a plurality of role components in a multi-agent system aspect, the architecture comprising: a co-ordinator controller; a load manager; a component installer for installing said role components; and a package manager.

Another aspect of the invention relates to a method of providing one or more role components to a software agent participating or seeking to participate as a service consumer agent in an inter-agent interaction in a multi-agent system architecture, the method comprising the steps of: said service consumer agent requesting a service from a service provider agent; said service consumer agent identifying a mediator agent in the multi-agent system which is capable of providing said at least one role component determined by the mediator agent to be used by a service component to provide a means of interfaction between said service consumer agent and said service provider agent, wherein said service component is required by the service consumer agent for receiving the requested service, wherein , the mediator agent is identified by matching a service component description previously registered with said mediator agent by a service provider agent as having a suitable role component for the service component with a service description for the requested service which is contained in a mesaage sent by the service consumer agent to the mediator agent; dynamically installing the at least one role component provided by the mediator agent on the service consumer agent; and loading the at least one role component on the service consumer agent to enable the service consumer agent to participate in the inter-agent interaction, wherein said at least one role component is an Initiator role component which when loaded by said service consumer agent from said mediator agent enables the service consumer agent to directly request said service from said service provider agent identified by the downloaded Initiator role component when the service consumer agent executes it to get a service result.

Preferably, the method is performed dynamically whilst the agent is participating in the inter-agent interaction.

Another aspect relates to a software agent role component management scheme, wherein at least role component is required for an inter-agent interaction between a service consumer agent and a service provider agent in a multi-agent system, the scheme comprising the steps of: when a service consumer agent requests a service involving an inter-agent interaction, determining whether if one or more role components required for said inter-agent interaction are stored in a downloaded form in a local component storage element; and if a downloaded role component is found in said local component storage element, determining if the downloaded role component is an Initiator role component required for the service consumer agent to request said service from said service provider agent in said inter-agent interaction; and if the downloaded role component is an initiator role component, performing a version check of the downloaded Initiator role component for said service consumer agent; and if the downloaded role component is not an Initiator role component, locating a mediator agent having an Initiator role component for enabling the service consumer agent to request said service from a service provider agent ; downloading said Initiator role component from the mediator agent to said service consumer agent; packaging at least one downloaded Initiator role component into local component storage; and instantiating the downloaded Initiator role component, wherein said service provider agent is identified by said initiator role component when the service consumer agent executes it to get a service result.

Another aspect relates to a mediator agent arranged to mediate between an service consumer agent and at least one service provider agent in a multi-agent system, the mediator agent being arranged to identify one or more role components provided by a service component of the a multi-agent system which will enable said service consumer agent to request a service from at least one service provider agent within the multi-agent system, the mediator agent comprising: means to provide said one or more identified role components to the service consumer agent, wherein once the role component is loaded on the service consumer agent, the service consumer agent is provided with information which enables the requested service to be provided by the service provider agent, wherein at least one role component provided by the mediator agent is an Initiator role component, and wherein, once said Initiator role component has been loaded from said mediator agent, said service provider agent is identified by said Initiator role component when the service consumer agent executes it to get a service result and the service consumer agent is then able to directly request said service from said service provider agent.

Another aspect of the invention relates to a computer product comprising a suite of one or more computer programs provided on a computer readable data carrier, the one or more computer programs being arranged to implement any one of the method aspects of the invention.

Another aspect of the invention relates to a signal conveying a suite of one or more computer programs over a communications network, the suite of one or more computer programs being arranged when executable to implement any one of the method aspects of the invention.

Other aspects are as set out in the accompanying claims.

It will be appreciated by those skilled in the art that the invention can be implemented in any appropriate combination of software and hardware, and that invention can also be implemented by a synergy of software and hardware, for example, when a computer software product comprising one or more computer programs arranged to implement any one of the method aspects of the invention is run on a computer.

The invention provides a MAS architecture which uses conversational components as the main tool for interactions amongst participating agents. This allows an information consumer agent to interact with an information provider agent to supply an information service via an unknown language or interaction protocol, which supports the growing needs of service providers to differentiate their services in virtual environments such as electronic commerce.

The architecture of the invention enables agents residing on the same agent platform to interact using a new language, ontology, or interaction protocol by utilizing an ad-hoc interaction protocol which can handle messages with an unknown language and ontology. Advantageously, the generic service components enabling ad-hoc conversations can be dynamically installed into agents which are already running.

The features of the invention as defined above or by the dependent claims may be combined in any appropriate manner with any appropriate aspects of the invention as apparent to those skilled in the art.

The preferred embodiments of the invention will now be described with reference to the accompanying drawings, which are by way of example only and in which:
Figure 1 shows the internal architecture of a conversational service component according to the invention;
Figure 2A shows in more detail the internal structure and operational process of a C-COM service component;
Figure 2B shows in more detail the internal of an Outer Interface of a Initiator Role component of a C-COM service component;
Figure 2C shows schematically an alternative representation of the internal structure of the initiator Role component of a C-COM service component;
Figure 3A shows a state transition diagram of an Initiator role component according to the invention;
Figure 3B shows a state transition diagram of a respondent role component according to the invention;
Figure 4 shows generic agent roles in a multi-agent architecture according to the invention;
Figure 5 shows the structure of the co-ordination engine and the process for downloading, installation, and execution of an Initiator role component according to the invention;
Figure 6 shows the process for loading an instance of a conversational service component according to the invention;
Figure 7 shows an embodiment of the invention where a user is requesting services from a server;
Figure 8A shows an embodiment of the invention in which information service consumer and provider agents interact via a mediator agent; and
Figure 8B shows an embodiment of the invention comprising a multi-agent system for airline-ticketing.

There follows a detailed description of the preferred embodiments of the invention, which include a description of the best mode of the invention as currently contemplated by the inventors. Even where not explicitly described, it will be apparent to those skilled in the art that certain features of the invention can be replaced by their known equivalents, and the scope of the invention is intended to encompass such equivalents where appropriate.

The multi-agent system architecture of the invention is arranged to enable a plurality of software agents to interact, even when one or more of said software agents needs to employ an initially unknown content language and/or interaction protocol. The interaction is facilitated by providing a MAS architecture which supports the provision of one or more service components to a software agent which seeks to interact with another software agent. The additional service components are required when the initiating software agent and/or the responding agent determines that the interaction involves a content language and/or interaction protocol that it does not have the ability to support.

The service components are provided in a plug-and-play form, i.e., a service component is provided in any suitable form which the software agent is able to readily incorporate and then use directly, and which can be incorporated by the software agent dynamically without having to abort its interaction with other software agent (i.e., whilst the interaction proceeding, the additional software service components can be added to enhance one or more of the interacting software agents on the fly). The plug and play service component of the invention are termed herein "conversational components" (C-COMs).

Once a C-COM has been successfully installed, the two generic roles it supports (Initiator and Responder) are incorporated into the respective software agents, and provide both the initiating and responding agents with the same level of understanding of the ontology used within the messages they exchange during their interaction with each other. Thus, the conversational components (C-COMs) comprise software components which enable at least the required agent interactions (i.e., request and response) to occur during an information trade. Whilst the C-COM consists of at least the two generic roles, more role components (according to the roles needed for the interactions) may be provided to enable all interaction related messages to be composed and interpreted as appropriate by the role components which the various interacting agents support.

Thus within the multi-agent system (MAS) architecture according to the invention, plug-and-play of service components (C-COMs) into software agents to facilitate inter-agent interactions provides a "conversational" facilitator for inter-agent interaction. The C-COM software is arranged to enable required agent interactions (i.e. a request and response) to occur for a given service when the C-COM software is loaded appropriately onto the agents participating in the interaction.

Accordingly, a service component (C-COM) for plug and play in a software agent in a multi-agent system (MAS) can be defined as a software component which is used as the principle means of interaction between software agents and which can in preferred embodiments of the invention be installed and executed by a software agent dynamically. Generally, a C-COM service component will comprise an implementation of an interaction pattern which is a template of a frequently used interaction scenario amongst roles. For example, the interaction pattern for an auction can be described as follows. Firstly, the seller advertises something to sell; secondly, the one or more buyers send their bids to the seller; finally, the seller sells the product to a buyer who has sent the best bid before the closure of the auction. The C-COM service component is thus formed as a re-usable software component based on this interaction pattern. The C-COM service component can be generated in any suitable form which can be dynamically installed on and executed by one or more software agents within the MAS. A conversational component (C-COM) can therefore also be defined to be an implementation of a reusable interaction pattern which produces a service via interactions among role components within the conversational component.

The C-COM service component thus structurally comprises a plurality of role components for the interaction (where the number of role components provided is determined by the number of roles needed for the interactions). All the service interactions are performed via messages which can be interpreted and composed by the role components. As the role components are aware of the content language, ontology, and interaction protocol used for a given service, an agent can participate (as a client, a server or both) just by installing one or more C-COM service components for a given service, even if the agent has no awareness of the required content language or interaction protocol.

The two generic role components provided by a C-COM service agent are the Initiator and Responder role components. The Initiator and Responder role components are aware of the content language, ontology, and IP used for any given information trade. From an agent's point of view, the Initiator role component is a black box which hides the interaction process with its designed Respondent role components from its master agent (the agent which installs the role component) and only exposes an interface which specifies the input and output data needed to execute the role component. It is possible for more than one role component to be plugged into an agent concurrently.

The C-COM service components are provided by a mediation facility which enables each software agent to determine an appropriate C-COM service component and/or to identify the appropriate role component provided by a C-COM service component to enable the software agent to proceed with a specific inter-agent interaction. In an Information MAS-type environment, the invention enables software agents such as an information provider agent (IPA) to participate in an existing agent society by providing the Information Provider Agent (IPA) with one or more appropriate Initiator role component(s) to enable interaction with one or more information consumer agents (ICAs) via a public mediator facility. An information consumer agent (ICA) is able to interact with the new information provider agent (IPA) by installing the Initiator role component for a given information trade, even if the Information Provider Agent (IPA) doesn't initially recognise the required content language or interaction protocol required for the information trade. It is the multi-agent system architecture (CCoMaa) which defines the roles of the participating agents and the procedures which they should comply with in order to install C-COMs and to be capable of interacting with the corresponding agents during the information trade.

The two generic roles for the C-COMs are 'Initiator' and 'Respondent', however, these roles can be specialised into more roles according to the application requirements. The `Initiator' role component is installed in a client agent and is required to obtain the service result from a server agent. The 'Respondent' role component is installed in a server agent in order to provide services to the client agent and to one or more other client agents. The client agent and server agent interact via the messages which are generated and interpreted by their respective role components according to a predefined content language, ontology, and interaction protocol for the service in question, which are defined by the multi-agent system architecture (CCoMaa).

One embodiment of the invention provides a mediator agent for a multi-agent architecture (MAS) which provides the role components to the software agents dynamically, i.e., on the fly. For example, a mediator agent may provide an 'Initiator' role component to a client agent dynamically whilst the client agent is already running in the MAS. As a result, the client agent does not need the 'Initiator' role component a priori, instead, the client agent can request a service and receive it without prior knowledge of the content language or interaction protocol required by the server agent providing the requested service.

The appropriate mediator agent for a software agent in a MAS is identified by determining whether the mediator agent has a suitable Initiator role component for the software agent's desired inter-agent interaction. This is achieved through the use of a service component description of the service component which provides a description of each of the plurality of role components comprising the service component, including the necessary Initiator and Respondent role components. The mediator agent then provides the role components dynamically and these are loaded on the software agent whilst the agent is running in the MAS. Once an Initiator role component is loaded from a mediator agent, the client agent is directly able to request a service from the available service agent. Suitable server agents are identified by the downloaded Initiator role component when the client agent executes it to get a service result. Advantageously, the resulting MAS has a very loosely coupled architecture which allows agents to join, disengage and/or rejoin with minimal impact, just by installing one or more C-COMs.

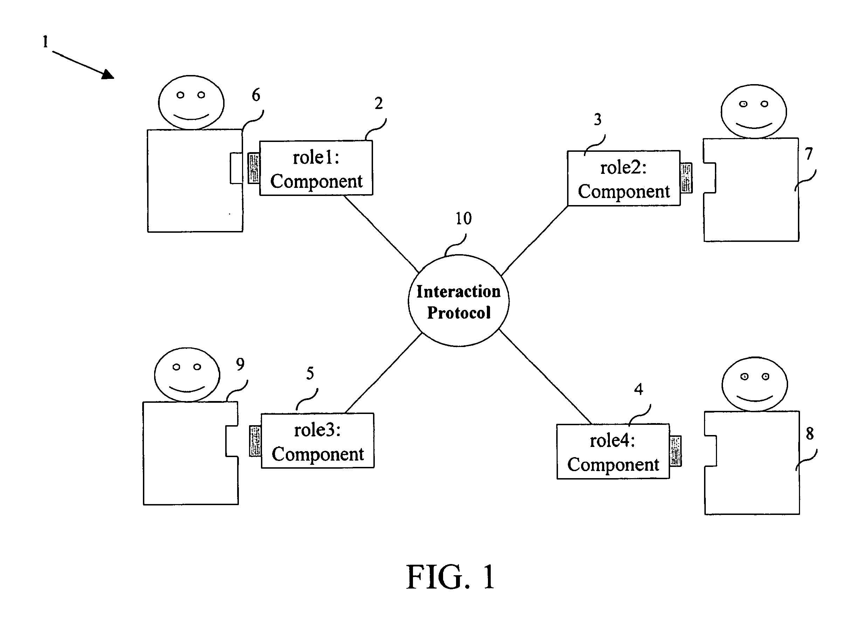

Referring now to Figure 1, the structure of a service component (C-COM) for a software agent according to a first embodiment of the invention is shown schematically. In Figure 1, C-COM 1 comprises four role components 2,3,4,5 . Each role component 2, 3, 4, 5 can be plugged dynamically into an agent. Four agents are shown schematically in Figure 1, as agents 6, 7, 8, 9.

From an agent's point of view, each role component is a black box which hides the interaction protocol 10 with other role components and just shows an interface which specifies the input and output data needed to execute the role component. As shown in Figure 1, a role component 2,3,4,5 is plugged into an agent 6,7,8,9 respectively when that agent 6,7,8,9 participates in an interaction. However, more than one role component can be plugged into an agent. An agent which installs a role component is called a Master Agent of the role component.

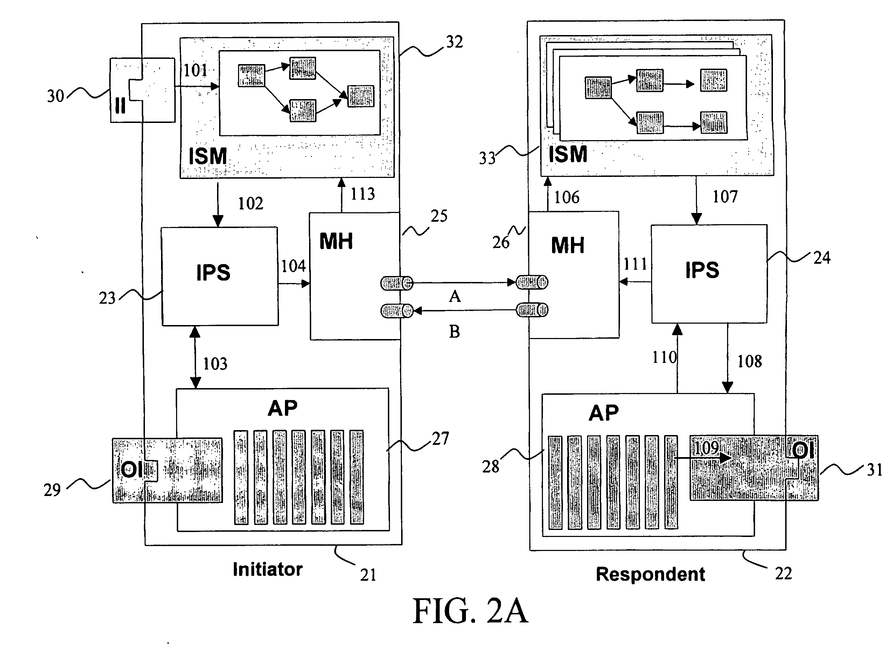

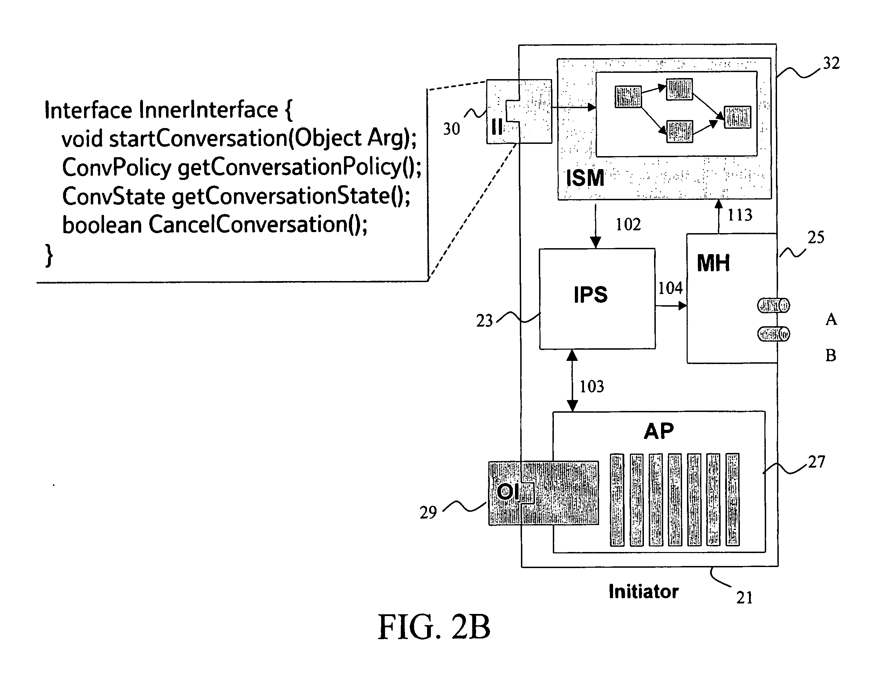

The interactions between role components of the C-COM are controlled by an Interaction Protocol (IP). Each role component performs actions in each stage of the Interaction Protocol to produce the required service. A role component is defined as a finite-state-machine that performs actions according to its current state to produce the required service. A role component reveals a set of interfaces to its user. The structure of a role component is discussed in more detail later with reference to Figures 2A and 2B of the accompanying drawings.

Accordingly, the C-COM can be denoted as follows:
C-COM = <IP, Cs>
where IP is an Interaction Protocol, as defined below, and Cs is a set of finite state machine-like components having one or more roles defined in the IP. The term Interaction Protocol (IP) describes what sequences of which messages are permissible among a given set of roles, for example, see the specifications of standard interaction protocols (by FIPA) from http://www.fipa.org/repository/ips.html.

In Figure 2A, each role component 21, 22 comprises an Interaction Protocol Scheduler (IPS) 23, 24, a Message Handler (MH) 25, 26, an Action Pool (AP) 27, 28 and one or more Interfaces 29, 30, 31. Each role component 21, 22 functions as a Finite State Machine, driven by internal state changes, and has a different set of internal states according to the role the component plays in the interaction protocol employed for a given C-COM service component. Each Interaction Protocol Scheduler (IPS) 23, 24 schedules and executes all the actions stored in the Action Pool (AP) 27, 28 of its role component 21, 22 according to the internal state changes of its role component.

For this purpose, each role component 21, 22 maintains an Interaction State which is managed by the Interaction State Manager (ISM) 32, 33. The Message Handler (MH) 25, 26 of each agent's role component is responsible for validating outgoing messages and interpreting incoming messages forming the interaction between the two agents.

The role component 21, 22 provides a number of interfaces 29, 30, 31 for customisation purposes. In this context, an interface 29, 30 31 is defined as a set of method signatures. An interface 29, 30, 31 must be provided with an implementation of the method signatures to be executed at run time.

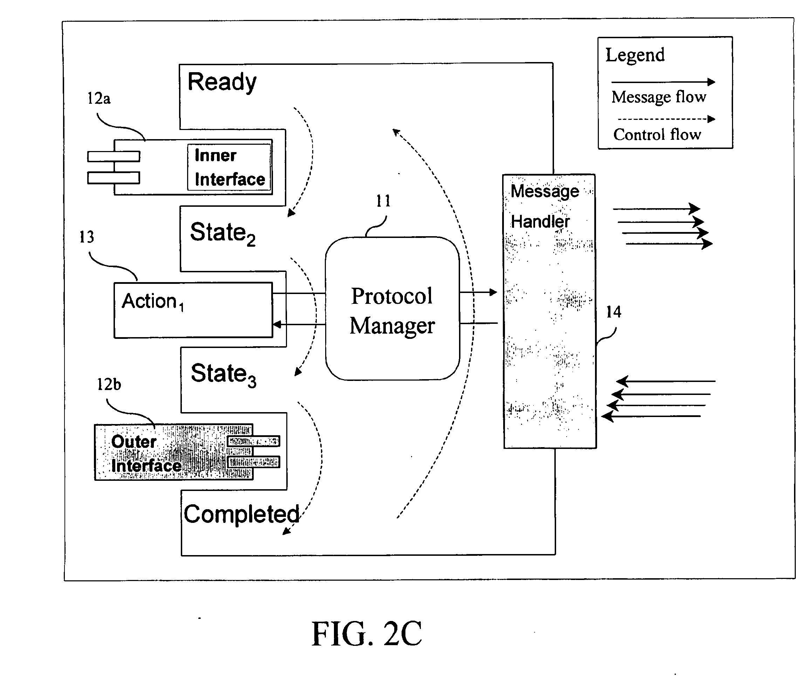

As shown in Figure 2A (and also in Figure 2B) Initiator role component 21 has two kinds of interface: an Outer Interface (OI) 29 and an Inner Interface (II) 30. The Outer Interface (OI) 29 defines the signature of a trigger method. The trigger method signature triggers the execution of the entire C-COM; i.e., it triggers the input data and the service result which is returned to the master agent (not shown in Figure 2C) which installs the role component. Calling the trigger method in the Outer Interface (OI) 29 activates the Initiator role component 21 which then activates all its other Respondent role components (e.g., in Figure 2C it activates respondent role component 22) in the appropriate order.

An inner interface 30 defines a trigger method (in that a call to the method by a service consumer activates the function of the whole C-COM) which is called by a service consumer to get a service result from the role component 2. The role component 2 implements the inner interface 30 to produce the required service result. Figure 2B shows more detail of an Inner interface 30, together with some of the other elements comprising the role component which are described in more detail in the description of Figures 2A. (and 2C) The inner interface 30 defines four methods that can be called by a device that installs the Initiator Role component:
startConversation(Object Arg) method triggers the initiation of a coordination process;
getConversationPolicy() method returns the business rules used in the coordination;
getConversationState() method returns the current state of the coordination; and.
cancelConversation() method is used to abort a coordination in the middle of the coordination.

An Internal Interface (II) 30 is an information channel from the master agent to the role component 21. A role component is able to ask its master agent to provide ontology items that are necessary to create a message. For example, if a Respondent agent needs access to a knowledge source to get information to populate a response message, it can request that a master agent provides the Respondent role component with the requested information. The same is necessary for an Initiator role component.

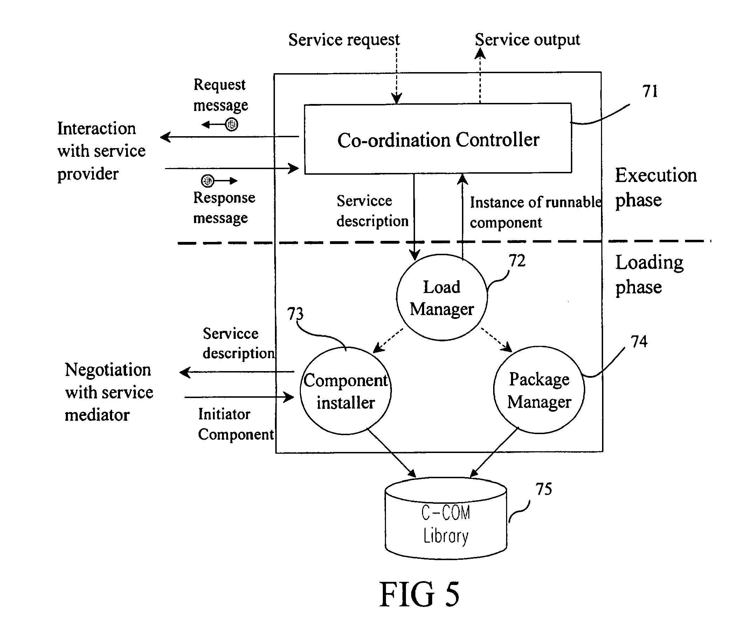

Outer interface 29 defines methods which are called by the role component 2 to get application specific input. The agent which installs the role component 2 should provide an implementation of the outer interface 29. Then, the role component 2 interacts with the implementation to produce the required service result. The outer interface 29 enables the customisation of the role component 2 for different application requirements. For instance, a Respondent role component can be reused in different applications by providing different implementation of outer interface 29. The communication between the role component and application specific implementation via outer interface is controlled via Coordination Controller 51 in Figure 5. More specifically, all the request for application specific input value is to through the outer interface 30 to the Coordination Controller 51 which is then responsible for getting the required value from a human user defined implementation or by executing another C-COM.

The operational process of a C-COM can also be understood with reference to Figure 2A. The activation of a C-COM is started when the startConversation() method of a Initiator Role component is called (101) by Initiator Role Component 21. The method call (101) triggers the change of Interaction State (102) which is propagated to activate the Interaction Protocol Scheduler (IPS) 23 of the Initiator Role Component 21. The IPS 23 then schedules the next action that should be executed from the Action Pool 27. The execution of an action will return a message (103) that should be sent to Respondent Role component (22). The IPS 23 sends the message (104) to the 'Message Handler' module 25 to send it to appropriate Respondent Role components (e.g. Respondent Role Component 22 as shown in Figure 2A). The 'Msg Handler' module 25 will find any devices that have installed the Respondent Role component (22) of the C-COM by querying a yellow page service (provided within the MAS, see the FIPA abstract architecture specification for further details) and the Message Handler 25 sends the message (A) to one or more found Respondent Role components (22). The 'Message Handler' module 26 of a Respondent Role component 22 forward the received message (A) to its 'Interaction State Manager' module (33) to update the state (106). This triggers the work of the IPS 24 of the Respondent Role component 22 which schedules actions that should be executed to handle the input message (107 & 108). The activated action may call any methods (109) from the Outer Interface (31) of the Respondent Role component 22 to get further input data required (e.g. from a human user or any other information source - not shown in Figure 2A). Once the action pool (AP) has prepared a response message (110), it forwards the message to the IPS (24) which passes the message to the 'Message Handler' module (26) to send the message (B) back to the Initiator Role component (21) (111). The 'Message Handler' module 25 of the Initiator Role component 21 then forwards the received response message (B) from the Respondent Role component 22 to the 'Interaction State Manager' module (32) to update the state of the coordination (113). This, again, triggers the work of the IPS 23 to schedule the next action(s) (updating again state 102) that should be executed by the initiator role component 21 according to one or more pre defined business rules (which are provided by calling the getConversationPolicy() method which returns the business rules used in the coordination).

Figure 2C shows alternative simplistic schematic representations of the internal structure and state transitions of a role component. In Figure 2C, each role component comprises four main modules: a Protocol Manager (equivalently an Interaction Protocol Scheduler) 11, an interface (usually either an Inner interface 12a or an outer interface 12b although both are shown in Fig. 2), an Action pool 13, and Message Handler 14. The Protocol Manager 11 controls all the actions of a role component according to the interaction protocol employed by the role component and the nature of the role component in the interaction protocol (see Figure 1). The Protocol Manager 11 interacts with the Message Handler 14 to send and receive messages. The Message Handler 14 filters messages which are sent to the role component from the message queue of its Master Agent.

In the context of the invention, both the inner interface 12a and the outer interface 12b are defined as a set of method signatures that specify the method name, input arguments, and output of the method (c.f. the definition of 'Interface' in Java). When a role component interacts with its Master Agent, the Master Agent installs the implementation of the appropriate interface 12a or 12b, in accordance with the role of the role component.

Inner interface 12a defines a trigger method (in that a call to the method by a service consumer activates the function of the whole C-COM) which is called by a service consumer to get a service result from the role component 2. The role component 2 implements the inner interface 11 a to produce the required service result. Outer interface 12b defines methods which are called by the role component 2 to get application specific input. The agent which installs the role component 2 should provide an implementation of the outer interface 12b. Then, the role component 2 interacts with the implementation to produce the required service result. The outer interface 12b enables the customisation of the role component 2 for different application requirements. For instance, a Respondent role component can be reused in different applications by providing different implementation of outer interface 12b. The communication between the role component and application specific implementation via outer interface is controlled via a Coordination Controller 71 (see Figure 5). More specifically, all the request for application specific input value is to through the outer interface 12b to the Coordination Controller 71 which is then responsible for getting the required value from a human user defined implementation or by executing another CCOM.

Thus an Initiator role component is a role component which has an inner interface 12a and an outer interface 12b, whereas a Respondent role component is a role component which has an outer interface 12b, but not an inner interface 12a. When a role component is installed into a Master Agent, the component has "Ready" state. When any methods in Inner Interface/Outer Interface or Actions are executed by Protocol Manager 11, the component transitions to next the state ("State 2", "State 3", and so forth until finally the "Completed" state is achieved). Once the component reaches to "Completed" state, it automatically resets its state to "Ready" waiting another request from a service consumer (for the Initiator role component) or the Initiator role component (for the Respondent role component).
The Initiator and Respondent role components are generic in that they can be specialised for more specific role components according to the requirements of the target C-COM. A Master Agent can handle multiple trigger messages concurrently by installing multiple Respondent role components.

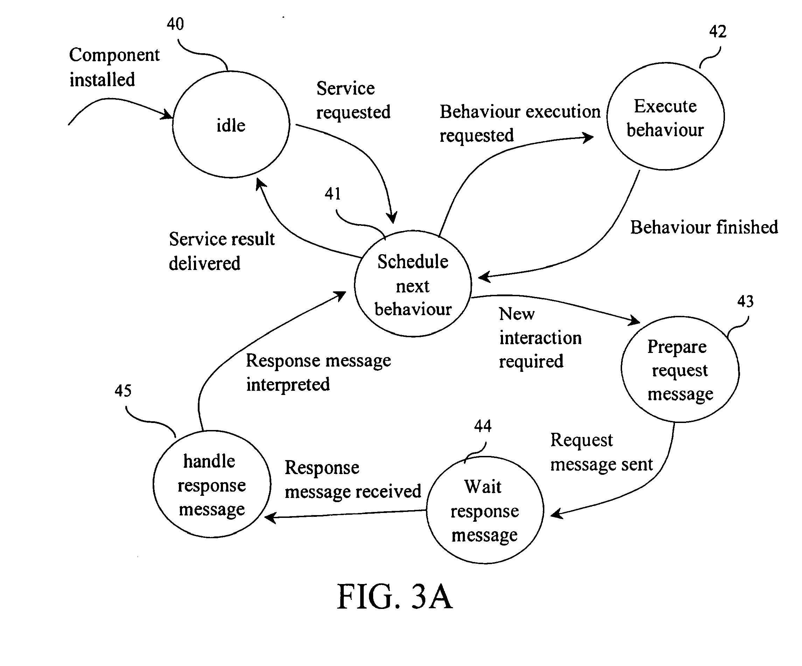

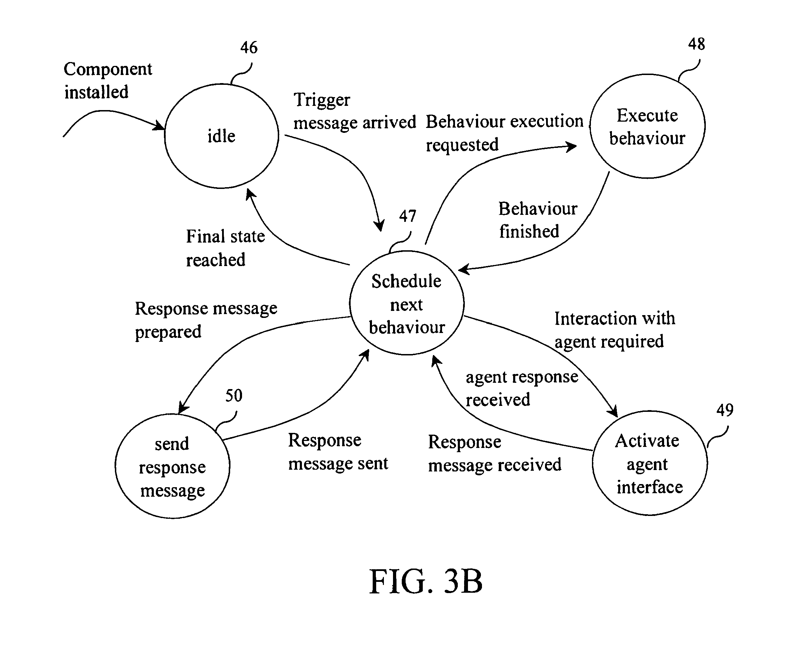

Figures 3A and 3B show the state transition diagrams which show the internal functionality of the Initiator and Respondent role components respectively.

In Figure 3A, an installed Initiator role component is initially in an "Idle" state 40. After a service request has been issued by the Initiator role component the Initiator role component is in the "Schedule Next Behaviour" state 41. The behaviour execution request then causes the Initiator role component to execute the behaviour (state 42) and once this is finished the component returns to its schedule next behaviour state 41. When a new interaction is required the Initiator role component prepares a request message 43. Once the request message has been sent by the Initiator role component to one or more Respondent role components, the Initiator role component is then in a wait response message state 44. Once the response message has been received, the Initiator role component is in a handle response message state 45. The response message is then interpreted by the Initiator Role component which then enters its "Schedule Next Behaviour" state 41, before delivering the service result to the caller of its Inner Interface and returning to the idle state 40.

In Figure 3B, an installed Respondent role component is initially in the "Idle" state 46. After a service request has been issued by the Respondent role component, the Respondent role component is in the "Schedule Next Behaviour" state 47. The behaviour execution request then causes the Respondent role component to execute the behaviour (state 48) and once this is finished the Respondent role component returns to the "Schedule Next Behaviour" state 47. When a new interaction is required the Respondent role component enters the "Activate Agent Interface" state 49. Once the response is received from an agent, the Respondent role component again returns to the "Schedule Next Behaviour" state 47. The response message is then prepared and the Respondent role component agent enters the "Send Response Message" state 50. Once the message has been sent, the respondent role component agent returns to the "Schedule Next Behaviour" state 47 before returning to "Idle" state 46.

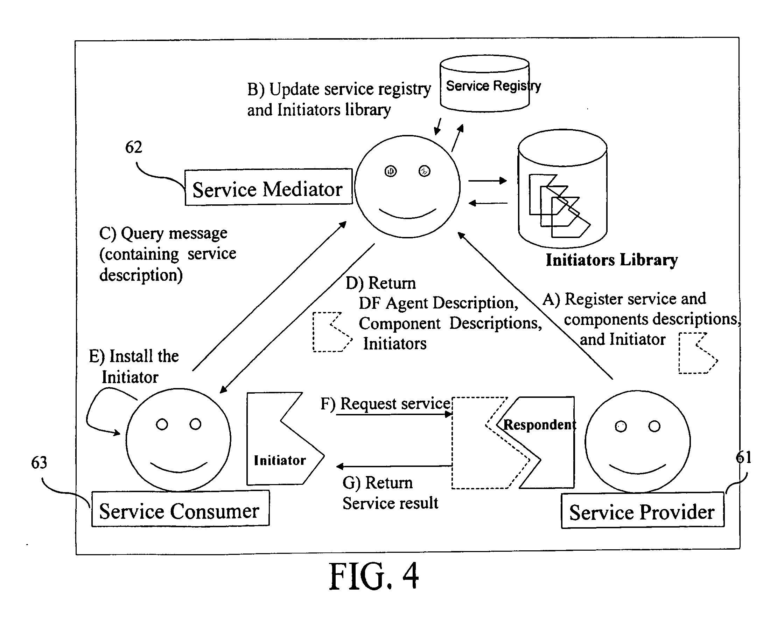

Thus, the multi-agent system (MAS) architecture (CCoMaa) according to the invention enables a plurality of software agents to interact with each other by installing appropriate C-COM service component role components. The C-COM service components allow existing agents to interact with new service-providing agents (SPAs) by dynamically installing and executing Initiator role components which are provided by the new service providing agents. To facilitate this dynamic configuration change management, the multi-agent system architecture (CcoMaa) needs certain special agents having predefined roles. For example, special agents can be implemented by the multi-agent system architecture (CcoMaa) to provide the functions of a service mediator, a service consumer, and a service provider with the multi-agent system architecture (CCoMaa). Fig. 4 shows schematically some generic agent roles in the multi-agent system architecture (CcoMaa) and their interactions.

In the multi-agent system (MAS) architecture according to the invention, an agent may have one of a plurality of roles. For example, as Fig. 4 shows schematically, the agent may be a service provider agent (SPA) 61, a service mediator agent (SMA) 62, and a service consumer agent (SCA) 63. It will be appreciated by those skilled in the art that the term "SPA" can be considered in this embodiment of the invention as comprising a "server agent" and that the term "SCA" can be considered in this embodiment of the invention as comprising a "client agent" where the Multi-Agent System Architecture (CCoMaa) provides a client-server implementation of the invention. Thus, an information provider agent (IPA) is an example of a Service Provider Agent (SPA), and a Information Consumer Agent (ICA) is an example of an Service Consumer Agent (SCA).

The Service Provider Agent (SPA) 61 registers the service description, component descriptions, and executable Initiator role components (actions "A" shown in Fig. 4). The Service Provider Agent (SPA) 61 registers its service description to the service mediator agent 62 by a process which differs from the one defined by FIPA.

More specifically, according to the invention, the Service Provider Agent (SPA) 61 registers an executable Initiator role component, a component description (which is used by the Service Consumer Agent (SCA) for installation and execution of the executable Initiator role component), and a service description. Advantageously, as the Initiator role component generates and interprets all messages which will be exchanged by the Service Provider Agent (SPA) 61 with a Service Consumer Agent (SCA) 63, there is no need for a Service Consumer Agent (SCA) 63 to have knowledge a priori to requesting a service of the requirements imposed by the Service Provider Agent (SPA) 61.

The Service Mediator Agent (SMA) 62 according to the invention is responsible for maintaining the service registry and Initiator library that contains Initiator role components (actions "B" in Fig. 4). The service registry plays the role as defined in FIPA specifications or other similar systems. The Initiator library maintains the pair of component description and the executable Initiator role component. The component description specifies the information needed to install and execute the executable Initiator role component.

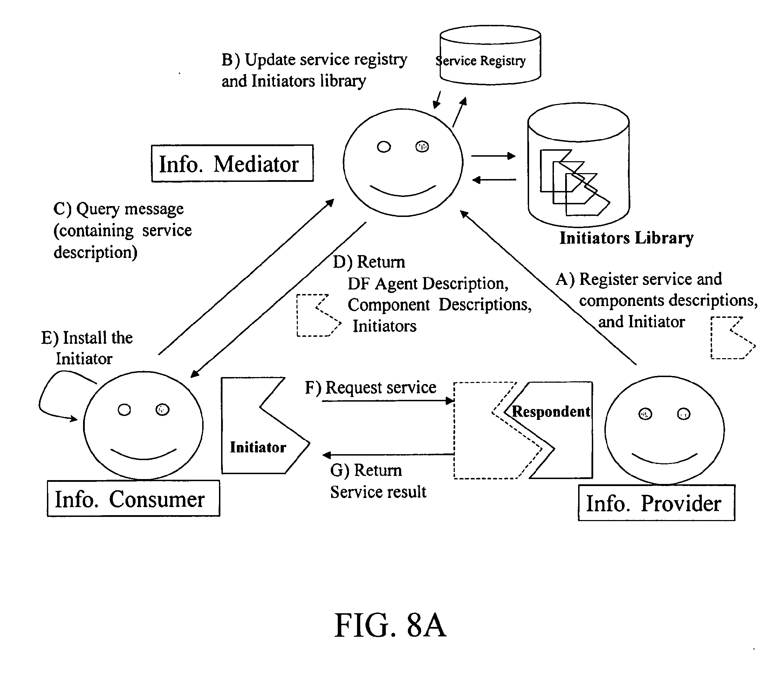

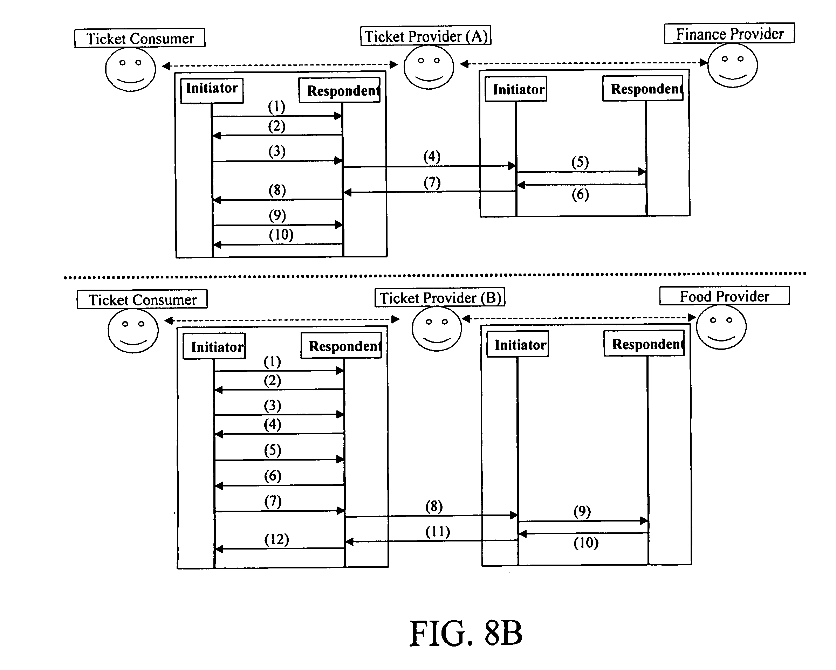

The difference between the service registration process in this invention and that of FIPA can be explained in detail as follows in which a specific embodiment of the invention relating to an airline ticketing scenario is described. This embodiment is described in more detail later with reference to Figure 8 of the accompanying drawings.

### FIPA service registration

Firstly, in the FIPA specifications, a FIPA Service Provider Agent (SPA) registers its description to a Directory Facilitator (DF) agent as per the following example which is described in terms of pseudocode:

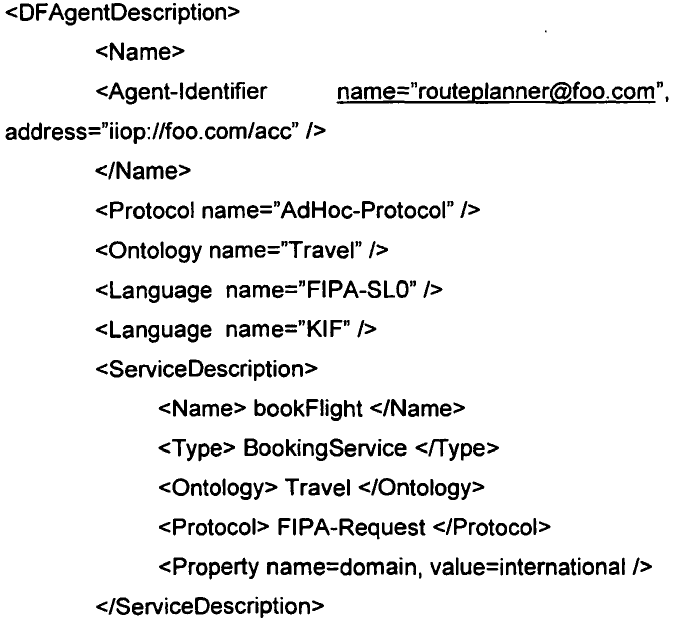

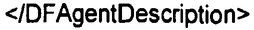

The DF agent stores the agent description in its local table. When a Service Consumer Agent (SCA) sends a request message to the DF agent to locate a Service Provider Agent (SPA) for a given service, the DF agent returns the names of any suitable SPAs it finds to the SCA. Once the Service Consumer Agent (SCA) receives the name of one or more SPAs, it starts an interaction with those SPAs employing the ontology, language, and interaction protocol specified in the service description.

The format of the query message that the Service Consumer Agent (SCA) sends to the DF agent is as follows in pseudocode:

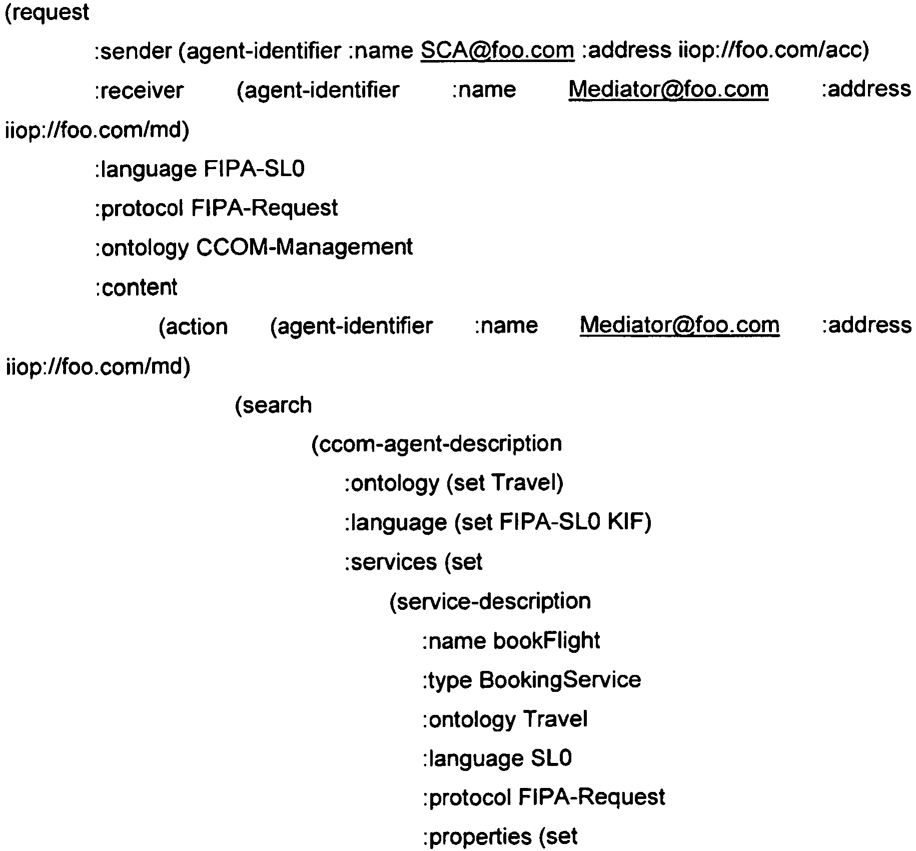

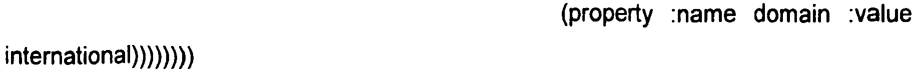

According to the invention, however, the above message is used only by a Mediator Agent to find appropriate SPAs and returns the list of names of suitable SPAs (with each entry in the form of "<Agent-Identifier name="routeplanner@foo.com", address="iiop://foo.com/acc" /> ") to the SCA.

### Service Registration using Role Components

On the other hand, the Service Provider Agent (SPA) of the invention registers the following form of description to a service mediator agent (SMA) . The example is provided in pseudo code and comprises of a sample CCoMaa agent description which is used to register a service and Initiator component by a Service Provider Agent (SPA) comprising an Information Provider Agent (IPA) (see also the description referring to in Figures 8A and 8B which relate to an embodiment of the invention concerning airline ticketing information):

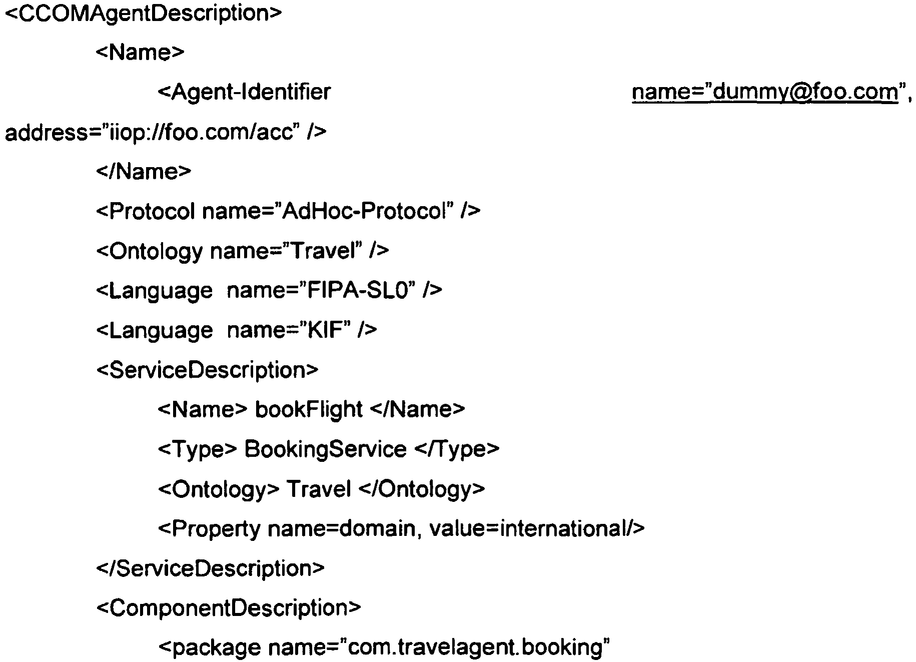

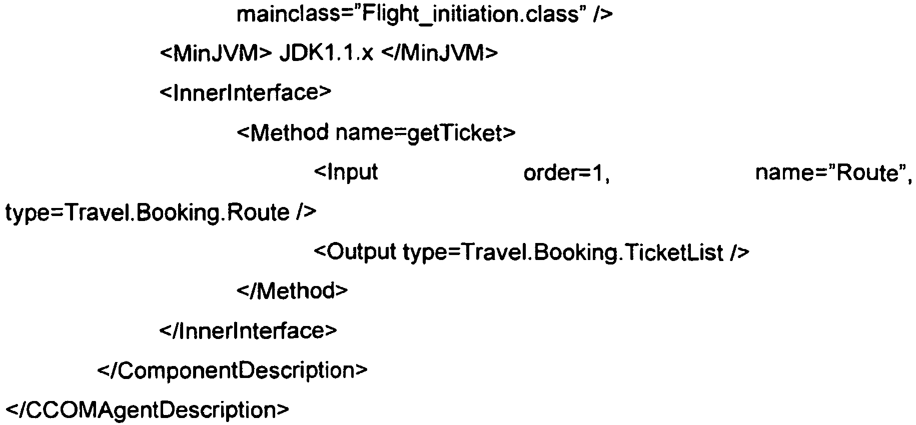

The Multi-Agent System Architecture (CCoMaa) agent description thus consists of a service description and a component description. The service description consists of name, type, and properties fields. The component description has three sub-descriptions: Interface, file and graphical user interface (GUI) descriptions.

The Interface description specifies the trigger method and ontology items used as input and output of the trigger method. The File description is used by the ICA to install the downloaded Initiator component in the local device on which the agent is running. Finally, the GUI description is optional. A Service Provider Agent (SPA) 61 can provide a Service Consumer Agent (SCA) 63 with a GUI component which can be used to retrieve additional ontology items (which might not be known to the SCAs) used by the Initiator role component to pass to the Respondent role component.

Advantageously, once the service provider has registered its service(s) to an Service Mediator Agent (SMA) 62, any Service Consumer Agent (SCA) 63 can contact the Service Mediator Agent (SMA) 62 to get contact information for the Service Provider Agent (SPA) 61. To get the contact information, the Service Consumer Agent (SCA) 63 sends a message that contains a service description to the Service Mediator Agent (SMA) 62 (action "C" in Fig. 4). The contents of the message can be as per the following pseudocode example (again given in the context of the Service Consumer Agent (SCA) comprising an ICA, and the Service Provider Agent (SPA) comprising an IPA, see Figures 8A and 8B for more details).

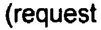

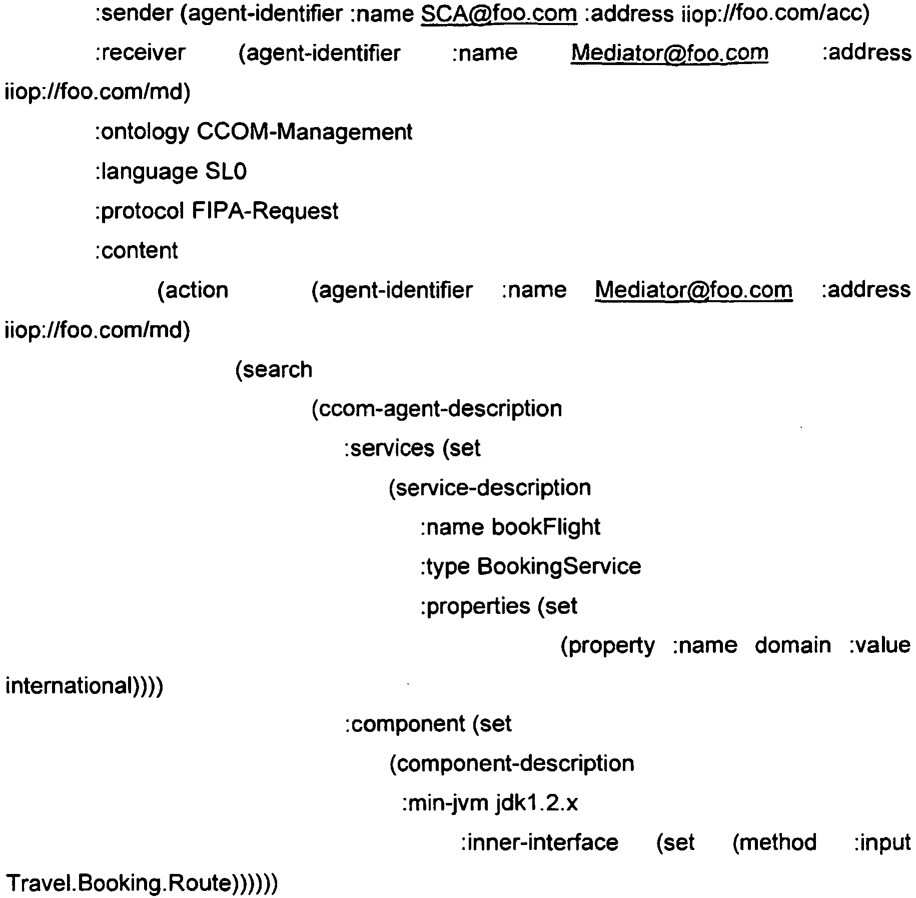

This request message is also different from that of FIPA, as the service component agent (SCA) doesn't have to specify a language and protocol in a service description used for service acquisition. Once a Service Consumer Agent (SMA) 63 sends this request message to a Service Mediator Agent (SMA) 62, the Service Mediator Agent (SMA) 62 will search through its list of pre-registered Service Provider Agents (SPA) 61.

If a matching agent description is found, the Service Mediator Agent (SMA) 62 returns the agent description of the Service Provider Agent (SPA) 61 and an executable Initiator role component to the Service Consumer Agent (SCA) 63 (actions "D" in Figure 4). If any contact information is returned by the Service Mediator Agent (SMA) 62, the Service Consumer Agent (SPA) 61 installs the executable Initiator role component into its Initiator library, based on the component description (action "E" in Figure 4) and executes the Initiator role component to get the service result from the Service Provider Agent (SPA) 61 (actions "F" and "G" in Figure 4).

### Dynamic download, installation and execution of C-COM

The Service Consumer Agent (SCA) 63 shown in Fig. 4 is equipped with a coordination engine which is responsible for downloading, installing, and executing an Initiator role component. Referring now to Figure 5, the structure of the co-ordination engine and the process for downloading, installation, and execution of an Initiator role component is shown schematically. The co-ordination engine forms part of an agent internal architecture arranged to enable the dynamic installation and execution of role components. The agent internal architecture comprises: a Co-ordinator controller, a Load manager, a Component installer; and a Package manager.

In Figure 5, co-ordination controller 71 activates a load manager module 72 when an executable Initiator role component instance is requested to perform a required service by another component from the Service Consumer Agent (SCA) 63 (see Fig. 4). If the Initiator role component has already been downloaded before, the load manager 72 module may (depending upon the requirements of the application) perform a version check to ensure that the latest version is installed. The versioning process is determined by the version control scheme currently in place. Otherwise the load manager 72 module will instantiate the Initiator role component and pass the instantiated object back to the co-ordination controller 71 where it will be executed. If there is no locally installed copy of the Initiator role component the load manager module 72 forwards a request to the component installer module 73, which will attempt to locate a Service Mediator Agent (SMA) 62 (see Fig. 4) that contains the required Initiator role component.

There are a variety of mechanisms that can be used to discover the available Service Mediator Agents (SMA) 62 within the network. For example, if the application is running on a FIPA compliant agent platform, the Directory Facilitator (DF) can be used. When the component installer module 73 locates a C-COM that matches the given requirements through querying a Service Mediator Agent (SMA) 62, the component installer 73 will download the Initiator role component of the C-COM.

The component installer 73 then returns the results of its search to the load manager 72. If a suitable C-COM was located, the result will contain the Initiator portion of the Initiator role component. The load manager 72 then stores the Initiator role component within the C-COM library 75, and requests that the package manager 74 installs the Initiator role component so that it can be executed. The package manager 74 then registers the Initiator role component within the C-COM library 75, and returns control to the load manager 72. Once the Initiator has been downloaded and installed, the load manager 72 records the details of the process so that in future the Initiator role component does not need to be downloaded again unless a new version becomes available. The result of the interaction with the Service Provider Agent (SPA) 61 is returned to the requester of the service result.

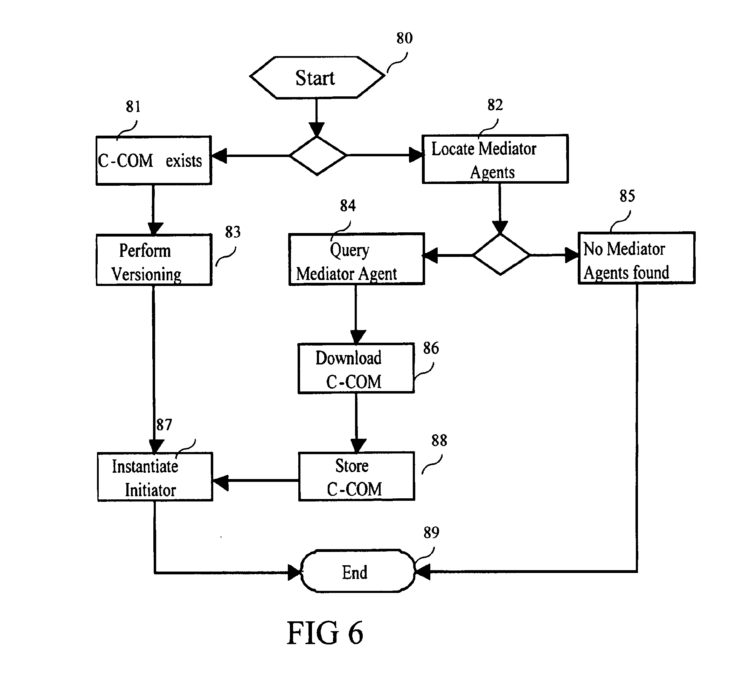

Fig. 6 shows steps in a method for loading an instance of a C-COM by the collaboration of Load Manager 72, Component Installer 73, and Package Manager 74 in Figure 5. First, Load Manager 72 asks Package Manager 74 if there are any Initiator-role components available for a service request. If there exists a Initiator-role component (step 81) that fulfils the required service, the Load Manager 72 then performs a version check (step 83) by sending a command to the Component Installer 73. The Component Installer 73 then contacts the Service Mediator Agent (SMA) 62 (see Figure 4) to get the latest version number for the corresponding Initiator role components. If the local Initiator role component is the latest version, the Load Manager 72 instantiates the role component and returns the instance to the Coordination Controller 71 and finishes the process (step 89).

If there is no role component managed by the Package Manager 74, the Load Manager 72 asks the Component Installer 73 to download one or more Initiator role components. Then the Component Installer 73, first, locates a Service Mediator Agent (SMA) (step 82). If no Service Mediator Agent (SMA) 62 is found (step 85), the process is finished. Otherwise, the Component Installer 73 queries the found Service Mediator Agent (SMA) 62 to get any appropriate Initiator role components (step 84). If found, the Component Installer 73 downloads the found Initiator role components (step 86) and passes them to the Package Manager 74 to store in its local component store for later use (step 88), and finally instantiates the Initiator role component (step 87) and finishes the process (step 89).

An embodiment of the invention can be used to implement a dynamic version management system in which service providers can upgrade services without affecting their customers by providing upgraded Initiator role components to a Service Mediator Agent (SMA) 62. The Service Consumer Agent (SCA) 63 needs to only compare versions of the local Initiator and remote Initiator when it contacts a Service Mediator Agent (SMA) 62. The version upgrade is then done automatically before the actual interaction with the Service Provider Agent (SPA) 62 is performed by the Service Consumer Agent (SCA) 63, in a manner which is hidden from human users. This enables the upgrade to be performed in a seemingly transparent manner for the user's application.

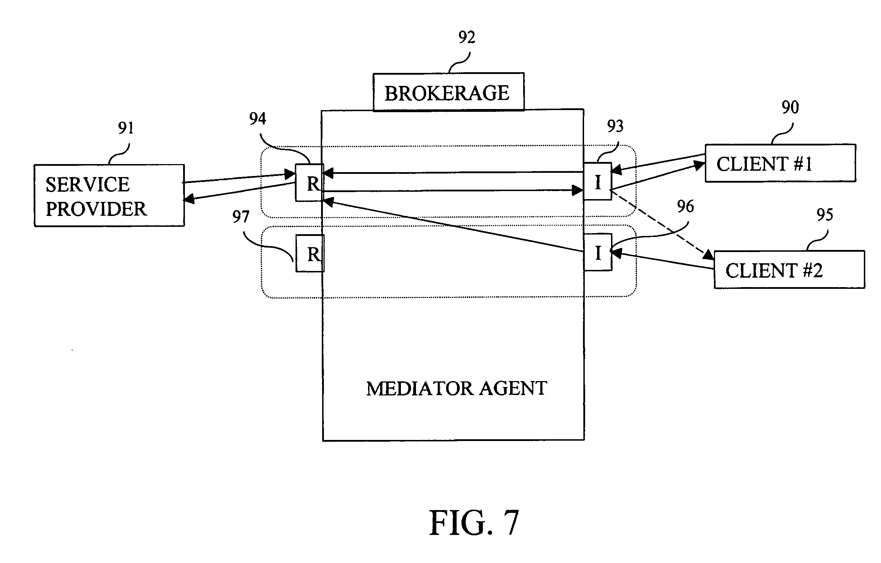

Thus the invention enables a user to have improved access on-demand to the latest version of an application provided by a remote service over a data/telecommunications network. For example, referring now to Fig. 7 of the accompanying drawings, a schematic diagram is provided which indicates how a first user 90 can be provided with access on-demand to remote services provided by service provider 91 via a brokerage 92. The application used by user 90 provides a client agent which interfaces with an Initiator role component 93 provided by a suitable mediator agent provided by the brokerage 92.

In Figure 7, Initiator role component 93 interacts with a Respondent role component 94 set up by the mediator agent, and is able to interface with a Service Provider Agent (SPA) of the service provider 91. The Initiator and respondent roles form part of a C-COM arranged to facilitate the software agents' interaction with each other in the manner described hereinabove with reference to the other embodiments of the invention.

The first user 90 is able to access the latest version of the service they have requested from the service provider without having any previous requirement to install any components specific to that version, as any required conversational components (i.e. Initiator and responder) will be installed as appropriate dynamically into the brokerage agent. Moreover, once the client agent of a second user 95 is provided with access to an appropriate Initiator role component 96, the client agent is able to interact directly with Respondent role component 94 as this is already associated with that type of Initiator role component.

In this way, the service provider and user agents can interact regardless of previous awareness of the interaction protocol or language required by the particular version of the application which the user wishes to access.

Advantageously, another embodiment of the invention can be used to implement a web service portal where new web service providers can be registered without affecting other existing agents.

Figure 8A shows an embodiment of the invention in which an information trade occurs between a client agent and a service provider agent in a multi-agent system architecture (CCoMaa) according to the invention. In Figure 8A, the three generic agent roles are the Information Consumer, the Information Provider, and the Information Mediator. In the CCoMaa shown in Figure 8A, an Information Mediator Agent (IMA) mediates all interaction between an Information Provider Agent (IPA) and an Information Consumer Agent (ICA).

As shown in Figure 8A, an Information Provider Agent (IPA) first registers its service and component description to an Information Mediator Agent (IMA) (step A). The Information Provider Agent (IPA) registers a service description (as required by FIFA) and additionally an executable Initiator component and a component description, which is used by the ICA during the installation and execution of the executable Initiator role component.

The Information Mediator Agent (IMA) is responsible for maintaining the service registry and Initiator library that contains Initiator role components (B). The service registry maintains all the registered service descriptions as defined in FIPA specifications. The Initiator library maintains the pair of role component description and the executable Initiator role component. The role component description specifies the minimum execution environment needed to install and execute the Initiator role component. This includes the required runtime environment (e.g. a JVM supporting the CLDC specification) and required computing resources (e.g. 20k storage space, 160x160 screen resolution, etc).

Once the Information Provider Agent (IPA) has registered its service(s), any Information Consumer Agents (ICAs) can contact the Information Mediator Agent (IMA) to retrieve the contact information on any registered IPAs. To retrieve the contact information, an ICA needs to send a query message containing a service description (C). The Information Mediator Agent (IMA) then tries to match the service description with one provided by an IPA. If a matching service description is found, the Information Mediator Agent (IMA) returns a tuple containing a component description of the Information Provider Agent (IPA) and an executable Initiator component to the ICA (D). If any contact information is returned by the IMA, the ICA installs the executable Initiator component into its Initiator library, based on the component description (E) and executes the Initiator component to get the service result from the Information Provider Agent (IPA) (F), (G).

Figure 8B shows schematically a simplified embodiment of the invention based on an airline-ticketing scenario. This scenario is based on a ticket consumer agent (TCA) which is assisting its owner in the purchase of an airfare from one of two available ticket provider agents (TPA).

In the embodiment shown in Figure 8B, each ticket provider agent (TPA) represents a different airline carrier and although they both adhere to the 'official' airline booking specification, they also utilize different Interaction Protocols (and so require different conversation policies to be implemented) as a way of enhancing and differentiating their services from competitors. Ticket provider agent TPA (A) provides an additional airport transfer service that allows users to book a variety of transport modes to and from the airport. In contrast ticket provider agent TPA (B) provides two additional services: 1) seat booking, which allows users to book their preferred seating position, and 2) food selection, which allows a user to choose their preferred meal from a selection of available meals.

Within this example the following assumptions are made:
1) The ticket consumer agent (TCA) has on previous occasions interacted with ticket provider agent TPA (A) and as such already has an installed copy of the appropriate C-COM service component role component(s);
2) The ticket consumer agent (TCA) contains an implementation of a graphical user interface (GUI) which can be used to extract information from the user regarding the type of airfare they wish to purchase. This GUI captures the values defined within the official airline booking specification. Values such as origin, destination, airfare type and price are captured.

Referring to the scenario shown in the upper part of Figure 8B, firstly, the ticket consumer agent (TCA) enables the user to specify via the TCA GUI which type of airfare they would like to purchase. Once this information is obtained the ticket consumer agent (TCA) requests a 'Travel. Booking. Ticket' object from the local coordination engine, which responds by loading and executing the Initiator role component from ticket provider agent TPA (A). A three-phase interaction protocol (IP) is used during the execution of this Initiator role component:
**Phase one**: The Initiator role component takes the input provided within its trigger method and sends a request message (1) to the corresponding Respondent role component of ticket provider agent TPA (A). If any available airfares match the provided input they are included within the response message (2) sent back to the Initiator role component.
**Phase two**: The Initiator role component's GUI will then show the list of matched airfares. Once the user selects an airfare, a request message (3) is sent back to the Respondent role component indicating which airfare the user wishes to book. The Respondent role component does not process the booking itself, rather it uses the services of a finance provider agent (FPA). The Respondent role component asks its local co-ordination engine for a 'Travel.Booking.TicketReciept' object which responds by loading and executing (4) an Initiator role component. This Initiator role component sends a request message (5) to the Respondent role component of the finance provider agent FPA, which performs the booking process. Upon completion of the booking process a response message (6) is sent back to the Initiator role component of the Information Provider Agent (IPA) (i.e. to the ticket provider agent TPA (A)) containing the 'Travel.Booking.TicketRecipent' object. This object is then given (7) to the Respondent role component of ticket provider agent TPA (A) by the co-ordination engine. To complete phase two of the IP the Respondent role component sends a confirmation message (8) back to the Initiator role component of the ticket provider agent TPA.
**Phase three**: The Initiator role component's GUI then allows the user to book transport to the airport if they wish. If the user chooses to book transport, then the Initiator role component sends a request (9) message to the Respondent role component. A response message (10) is then sent back to the Initiator role component.

Now consider the case where an Information Provider Agent (IPA) (in this embodiment a ticket provider agent (TPA) (A)) is unable to fulfil the service request. This is shown in the lower portion of Figure 8B. In such a situation, the Information Consumer Agent (ICA) (in this embodiment a ticket consumer agent TCA) is forced to locate another Information Provider Agent (IPA) which is achieved by contacting the nearest Information Mediator Agent (IMA). In this scenario there is only one other ticket provider agent (IPA), in this embodiment provided by ticket provider agent (TPA) (B). Once the Information Consumer Agent (ICA) locates Information Provider Agent (IPA) (B) via the Information Mediator Agent (IMA), it will complete the C-COM installation steps (described hereinabove with reference to Figure 4). The Initiator role component of the Information Provider Agent (IPA) (B) employs a different Interaction Protocol (IP) to the previous Initiator role component of Information Provider Agent (IPA) (A). A four-phase Interaction Protocol (IP) is used by the Initiator role component of Information Provider Agent (IPA) (B). Phases one and two are similar to the previously discussed IP with the exception that the Respondent role component of Information Provider Agent (IPA) (B) internally processes the airfare booking.

Phases three and four are described below:
**Phase three**: Once the user has booked their airfare the Initiator role component's GUI allows the user to select their preferred seating position. Once selected, a request message (5) is sent to the Respondent role component of ticket provider agent TPA (B), which is followed by a response message (6).
**Phase four**: The final phase of the Interaction Protocol (IP) involves the selection of food for the flight. The Initiator role component's GUI allows the user to indicate their food choice. A request message (7) is sent to the Respondent role component of ticket provider agent TPA (B). The Respondent role component takes the users food choice and requests a 'Travel.Booking.FoodReceipt' object from the local co-ordination engine. The co-ordination engine loads (8) an Initiator role component to fulfil this request. The Initiator role component then sends a request message (9) to the corresponding Respondent role component located in a food provider agent (FPA). The Respondent role component responds (10), and the Initiator role component of ticket provider agent TPA (B) passes the request object (11) back to the co-ordination engine. The Respondent role component then sends a confirmation message (12) back to the Initiator role component of the ticket consumer agent TCA.

The component-based multi-agent architecture thus enables open and flexible information exchange among multiple agents. The C-COM plug & play software component comprises two or more role components which abstract and hide all the details of interactions among the participating roles. In a multi-agent system (MAS) architecture (CcoMaa) within which the C-COM service components are deployed, an agent is able to participate in new services that have been added to an existing agent society even if the agent isn't initially able to recognise the interaction protocol (IP) or language used by the new services. By installing the appropriate role component using a C-COM service component an agent is able to take advantages of these new services, even if they have no previous understanding of the Interaction Protocol and Conversation Policy required for the new service interactions..

Participating agents in the CCoMaa should have the same level of understanding of the ontology items used for their interactions. If an Information Provider Agent (IPA) requires an additional unknown ontology item from an Information Consumer Agent (ICA), the Information Provider Agent (IPA) is forced to provide a GUI component that is then used to retrieve the unknown ontology items from the ICA's human user. It is possible to increase an ICA's autonomy by providing instead an ontology derivation rule which guides an ICA as to how the unknown ontology item can be derived from known ontology items.

The use of C-COM can prevent an ICA from learning the social interactions used with the other participating agents as a C-COM hides all the interaction details. An extended component description can be provided to resolve this by detailing the IP employed by the C-COM.

It will be appreciated by those skilled in the art that many aspects of the invention can be implemented in either software and/or hardware. The invention comprises embodiments in any combination of software and/or hardware as appropriate. Software elements of the invention can be provided by a computer product which may comprise a signal communicated over a communications network, for example, as a downloadable suite of one or more computer programs, and/or as a suite of one or more computer programs provided on a computer readable data carrier, which are able to execute the invention when loaded and run on an appropriate device. The invention can also be provided by a carrier having a computer program stored thereon, the computer program being executable on a terminal so as to cause the terminal to operate the invention.

As those skilled in the art will find apparent, the multi-agent system (MAS) provided by the invention enables individual components of the MAS provided by applications installed on different platforms providing a distributed computing environment to interact with one or more other applications supported by remotely located platforms. The platforms may support applications in the client and/or service domain.

Any pseudo-code described herein is provided as is and without any guarantee as to its completeness or accuracy.

The text of the abstract repeated below is hereby incorporated into the description: A service component enables client/server interactions even when information on the content language and/or interaction protocol required for the service the client agent has requested from the service agent is not known *a priori.* The service component has a generic structure comprising a plurality of role components which perform the service interaction between the client agent and the server agent and which provide sufficient information on the interaction requirements to enable the requested service to be provided.

## Claims

1. A multi-agent system comprising agents (61, 62, 63) having predefined service mediator, service consumer and service provider roles, and at least one service component (1) enabling a service consumer agent (63) of said multi-agent system to interact with a service provider agent (61) when requesting a service, the service component (1) comprising:
a plurality of role components (21,22) arranged to perform a service interaction between the service consumer agent (63) and said service provider agent (61), at least one of said plurality of role components comprising a Initiator role component (21) previously registered by the service provider agent (61) with a service mediator agent (62) and arranged to be loaded on to said service consumer agent (63) and at least one of said plurality of role components comprising a respondent role component (22) arranged to be loaded on to the service provider agent (61) as appropriate for the interaction with said service consumer agent (63), the loaded role components (21, 23) being arranged to provide the service consumer and service provider agents (63, 61) with information on one or more interaction requirements to enable the requested service to be provided,
wherein said Initiator role component (21) is loaded by said service consumer agent (63) from a mediator agent (62) identified through the use of a description of the service component (1), the mediator agent (62) dynamically providing the Initiator role to the service consumer agent (63), whereby once an Initiator role component is loaded from the mediator agent (62), the service consumer agent (63) is directly able to request the service from an available service provider agent (61) identified by the downloaded Initiator role component (21) when the service consumer agent (63) executes it to get a service result.

2. The multi-agent system as claimed in claim 1, wherein at least one of said role components (21,22) is attached to a component description including details of the minimum client platform capability of the service consumer agent (63) and the interfaces used by the service consumer agent (63) to interact with the role component (21,22).

3. The multi-agent system as claimed in any previous claim, wherein said Initiator role component (21) controls its own state.

4. The multi-agent system as claimed in any previous claim, wherein said Initiator role component (21) is reused for multiple requests.

5. The multi-agent system as claimed in any preceding claim, wherein each of the plurality of role components (21,22) is distributed by said mediator agent (62).

6. The multi-agent system as claimed in claim 5, wherein the mediator agent (62) provides each of the plurality of role components (21,22) dynamically to the client and service provider agents (63,61) and selects each one of said plurality of role components (21,22) for distribution using said service description and component description of the role component (21,22).

7. The multi-agent system as claimed in any preceding claim, wherein said Initiator role component (21) is provided dynamically to the service consumer agent (63) whilst the service consumer agent (63) is running.

8. The multi-agent system as claimed in any preceding claim, wherein said respondent role component (22) provided dynamically to the service provider agent (61) whilst the service provider agent (61) is running.

9. The multi-agent system as claimed in any preceding claim having a data structure which comprises Interaction Protocol information (10) and information comprising a set of components (21,22) related to one or more finite state machines whose roles are defined in the Interaction Protocol, the service component (1) being arranged to interface with one or more agents (61, 63) to provide role component information selected from said set of components which enables said one or more agents (61, 63) to perform an interaction with one or more other agents (61, 63) according to said Interaction Protocol (10).

10. The multi-agent system of claim 1 further comprising an architecture for dynamically installing and executing the plurality of role components (21,22), the architecture comprising a coordinator controller (71); a load manager (72); a component installer (73) and a package manager (74).

11. A method of providing one or more role components (21,22) to a software agent (61, 63) participating or seeking to participate as a service consumer agent (63) in an inter-agent interaction in a multi-agent system architecture, the method comprising the steps of:
said service consumer agent (63) requesting a service from a service provider agent (61);
said service consumer agent (63) identifying a mediator agent (62) in the multi-agent system which is capable of providing a at least one role component (21), determined by the mediator agent (62) to be used by a service component (1) to provide a means of interaction between said service consumer agent (63) and said service provider agent (61), wherein said service component (1) is required by the service consumer agent (63) to receive the requested service,
wherein the mediator agent (62) is identified by matching a service component description previously registered with said mediator agent by a service provider agent (61) with a service description for the requested service which is contained in a message sent by the service consumer agent (63) to the mediator agent (62);
dynamically installing the at least one role component (21) provided by the mediator agent (62) on the service consumer agent (63); and
loading the at least one role component on the service consumer agent (63) to enable the service consumer agent (63) to participate in the inter-agent interaction,
wherein said at least one role component (21) is an Initiator role component (21) which when loaded by said service consumer agent (63) from said mediator agent (62) enables the service consumer agent (63) to directly request said service from said service provider agent (61) identified by the downloaded Initiator role component (21) when the service consumer agent (63) executes it to get a service result.

12. A method as claimed in claim 11, wherein the method is performed dynamically whilst the service consumer agent (63) is participating in the inter-agent interaction.

13. A software agent role component management method, wherein at least role component (21,22) is required for an inter-agent interaction between a service consumer agent (63) and a service provider agent (61) in a multi-agent system, the method comprising the steps of:
when a service consumer agent (63) requests a service involving an inter-agent interaction,
determining whether if one or more role components (21) required for said inter-agent interaction are stored in a downloaded form in a local component storage element; and
if a downloaded role component is found in said local component storage element, determining if the downloaded role component is an Initiator role component (21) required for the service consumer agent (63) to request said service from said service provider agent (61) in said inter-agent interaction; and
if the downloaded role component is an Initiator role component (21),
performing a version check of the downloaded Initiator role component (21) for
said service consumer agent (63); and
if the downloaded role component is not an Initiator role component (21),
locating a mediator agent (62) having an Initiator role component (21) for enabling the service consumer agent (63) to request said service from a service provider agent (61);
downloading said Initiator role component (21) from the mediator agent (62) to said service consumer agent (63);
packaging at least one downloaded Initiator role component (21) into local component storage; and
instantiating the downloaded Initiator role component (21), wherein said service provider agent (61) is identified by said Initiator role component (21) when the service consumer agent (63) executes it to get a service result.

14. A mediator agent (62) arranged to mediate between an service consumer agent agent (63) and at least one service provider agent (61) in a multi-agent system, the mediator agent (62) being arranged to identify one or more role components (21,22) provided by a service component (1) of the multi-agent system which will enable said service consumer agent (63) to request a service from at least one service provider agent (61) within the multi-agent system, the mediator agent (62) comprising:
means to provide said one or more identified role components (21) to the service consumer agent (63),
wherein once the role component (21) is loaded on the service consumer agent (63), the service consumer agent (63) is provided with information which enables the requested service to be provided by the service provider agent (61),
wherein at least one role component provided by the mediator agent (62) is an Initiator role component (21), previously registered with said mediator agent (62) by said service provider agent (61) and wherein, once said Initiator role component (21) has been loaded from said mediator agent (62), said service provider agent (61) is identified by said Initiator role component (21) when the service consumer agent (63) executes it to get a service result and the service consumer agent (63) is then able to directly request said service from said service providing agent (61).

15. A communications network comprising a distributed computer environment adapted to perform the method of claim 11.

16. A computer product comprising a suite of one or more computer programs provided on a computer readable data carrier, the one or more computer programs when being executed perform the method as defined in any of claims 11 to 13.

17. A signal conveying a suite of one or more computer programs over a communications network, the suite of one or more computer programs when being executed perform the method as defined in any of claims 11 to 13.

## Patentansprüche

1. Mehragentsystem mit Agenten (61, 62, 63), die vordefinierte Servicevermittler-, Serviceverbraucher- und Serviceproviderrollen und zumindest eine Servicekomponente (1) aufweisen, die es einem Serviceverbraucheragenten (63) des Mehragentsystems ermöglicht, mit dem Serviceprovideragenten (61) zu interagieren, wenn ein Service angefordert wird, wobei die Servicekomponente (1) umfasst:
mehrere Rollenkomponenten (21, 22), die dazu angeordnet sind, eine Serviceinteraktion zwischen dem Serviceverbraucheragenten (63) und dem Serviceprovideragenten (61) durchzuführen, wobei zumindest eine der mehreren Rollenkomponenten eine Initiatorrollenkomponente (21) umfasst, die zuvor vom Serviceprovideragenten (61) bei einem Servicevermittleragenten (62) registriert und dazu angeordnet wurde, in den Serviceverbraucheragenten (63) geladen zu werden, und zumindest eine der mehreren Rollenkomponenten eine ansprechende Rollenkomponente (22) umfasst, die dazu angeordnet ist, in den Serviceprovideragenten (61) geladen zu werden, wie es für die Interaktion mit dem Serviceverbraucheragenten (63) geeignet ist, wobei die geladenen Rollenkomponenten (21, 23) dazu angeordnet sind, die Serviceverbraucher- und Serviceprovideragenten (63, 61) mit Informationen über eine oder mehrere Interaktionserfordernisse zu versorgen, um zu ermöglichen, dass der angeforderte Service bereitgestellt wird,
wobei die Initiatorrollenkomponente (21) vom Serviceverbraucheragenten (63) aus einem Vermittleragenten (62) geladen wird, der durch die Verwendung einer Beschreibung der Servicekomponente (1) identifiziert wird, wobei der Vermittleragent (62) die Initiatorrolle dem Serviceverbraucheragenten (63) dynamisch bereitstellt, wodurch, sobald eine Initiatorrollenkomponente aus dem Vermittleragenten (62) geladen ist, der Serviceverbraucheragent (63) direkt imstande ist, den Service von einem verfügbaren Serviceprovideragenten (61) anzufordern, der von der heruntergeladenen Initiatorrollenkomponente (21) identifiziert wird, wenn der Serviceverbraucheragent (63) sie ausführt, um ein Serviceergebnis zu erhalten.

2. Mehragentsystem nach Anspruch 1, wobei zumindest eine der Rollenkomponenten (21, 22) an einer Komponentenbeschreibung angefügt ist, die Einzelheiten der minimalen Clientplattformfähigkeit des Serviceverbraucheragenten (63) und der vom Serviceverbraucheragenten (63) zum Interagieren mit der Rollenkomponente (21, 22) eingesetzten Schnittstellen einschließt.

3. Mehragentsystem nach irgendeinem vorhergehenden Anspruch, wobei die Initiatorrollenkomponente (21) ihren eigenen Zustand steuert.

4. Mehragentsystem nach irgendeinem vorhergehenden Anspruch, wobei die Initiatorrollenkomponente (21) für mehrfache Anforderungen wiederverwendet wird.

5. Mehragentsystem nach irgendeinem vorhergehenden Anspruch, wobei jede der mehreren Rollenkomponenten (21, 22) durch den Vermittleragenten (62) verteilt wird.

6. Mehragentsystem nach Anspruch 5, wobei der Vermittleragent (62) jede der mehreren Rollenkomponenten (21, 22) den Client- und Serviceprovideragenten (63, 61) dynamisch bereitstellt und jede einzelne der mehreren Rollenkomponenten (21, 22) zur Verteilung mittels der Servicebeschreibung und Komponentenbeschreibung der Rollenkomponente (21, 22) auswählt.

7. Mehragentsystem nach irgendeinem vorhergehenden Anspruch, wobei die Initiatorrollenkomponente (21) dem Serviceverbraucheragenten (63) dynamisch bereitgestellt wird, während der Serviceverbraucheragent (63) läuft.

8. Mehragentsystem nach irgendeinem vorhergehenden Anspruch, wobei die ansprechende Rollenkomponente (22) dem Serviceprovideragenten (61) dynamisch bereitgestellt wird, während der Serviceprovideragent (61) läuft.

9. Mehragentsystem nach irgendeinem vorhergehenden Anspruch, mit einer Datenstruktur, die Interaktionsprotokollinformation (10) und Information mit einem Satz Komponenten (21, 22) umfasst, die mit einer oder mehreren Maschinen endlicher Zustände zusammenhängen, deren Rollen im Interaktionsprotokoll definiert sind, wobei die Servicekomponente (1) dazu angeordnet ist, an einen oder mehrere Agenten (61, 63) zu koppeln, um Rollenkomponenteninformation bereitzustellen, die aus dem Satz Komponenten ausgewählt ist, der es ermöglicht, dass der eine oder die mehreren Agenten (621, 63) eine Interaktion mit einem oder mehreren anderen Agenten (61, 63) gemäß dem Interaktionsprotokoll (10) durchführt/ durchführen.

10. Mehragentsystem nach Anspruch 1, weiterhin mit einer Architektur zum dynamischen Einbauen und Ausführen der mehreren Rollenkomponenten (21, 22), wobei die Architektur eine Koordinatorsteuerung (71); einen Lastmanager (72); eine Komponenteninstallationsvorrichtung (73) und einen Paketmanager (74) umfasst.

11. Verfahren zur Bereitstellung von einer oder mehreren Rollenkomponenten (21, 22) für einen Softwareagenten (61, 63), der als Serviceverbraucheragent (63) an einer Zwischen-Agent-Interaktion in einer Mehragentsystemarchitektur teilnimmt oder teilnehmen will, wobei das Verfahren die folgenden Schritte umfasst:
der Serviceverbraucheragent (63) fordert einen Service von einem Serviceprovideragenten (61) an;
der Serviceverbraucheragent (63) identifiziert einen Vermittleragenten (62) im Mehragentsystem, der imstande ist, zumindest eine Rollenkomponente (21) bereitzustellen, die vom Vermittleragenten (62) dazu bestimmt ist, von einem Servicekomponenten (1) verwendet zu werden, um ein Mittel der Interaktion zwischen dem Serviceverbraucheragenten (63) und dem Serviceprovideragenten (61) bereitzustellen, wobei die Servicekomponente (1) vom Serviceverbraucheragenten (63) zum Empfang des angeforderten Services benötigt wird,
wobei der Vermittleragent (62) identifiziert wird, indem eine Servicekomponentenbeschreibung, die zuvor von einem Serviceprovideragenten (61) beim Vermittleragenten registriert wurde, mit einer Servicebeschreibung für den angeforderten Service abgeglichen wird, der in einer Mitteilung enthalten ist, die vom Serviceverbraucheragenten (63) an den Vermittleragenten (62) gesendet wird;
dynamisches Einbauen der vom Vermittleragent (62) bereitgestellten zumindest einen Rollenkomponente (21) im Serviceverbraucheragenten (63); und
Laden der zumindest einen Rollenkomponente in den Serviceverbraucheragenten (63), um es dem Serviceverbraucheragenten (63) zu ermöglichen, sich an der Zwischen-Agent-Interaktion zu beteiligen,
wobei die zumindest eine Rollenkomponente (21) eine Initiatorrollenkomponente (21) ist, die es, wenn sie durch den Serviceverbraucheragenten (63) aus dem Vermittleragenten (62) geladen wird, dem Serviceverbraucheragenten (63) ermöglicht, den Service von dem Serviceprovideragenten (61) direkt anzufordern, der von der heruntergeladenen Initiatorrollenkomponente (21) identifiziert wird, wenn der Serviceverbraucheragent (63) sie ausführt, um ein Serviceergebnis zu erhalten.

12. Verfahren nach Anspruch 11, wobei das Verfahren dynamisch durchgeführt wird, während der Serviceverbraucheragent (63) an der Zwischen-Agent-Interaktion teilnimmt.

13. Softwareagent-Rollenkomponenten-Verwaltung, wobei zumindest Rollenkomponente (21, 22) für eine Zwischen-Agent-Interaktion zwischen einem Serviceverbraucheragenten (63) und einem Serviceprovideragenten (61) in einem Mehragentsystem erforderlich ist, wobei das Verfahren die folgenden Schritte umfasst:
wenn ein Serviceverbraucheragent (63) einen Service anfordert, der eine Zwischen-Agent-Interaktion beinhaltet,
Bestimmen, ob eine oder mehrere der für die Zwischen-Agent-Interaktion erforderlichen Rollenkomponenten (21) in heruntergeladener Form in einem lokalen Komponentenspeicherelement gespeichert sind; und,
wenn eine heruntergeladene Rollenkomponente in dem lokalen Komponentenspeicherelement gefunden wird, Bestimmen, ob die heruntergeladene Rollenkomponente eine Initiatorrollenkomponente (21) ist, die für den Serviceverbraucheragenten (63) erforderlich ist, um den Service vom Serviceprovideragenten (61) in der Zwischen-Agent-Interaktion anzufordern; und,
wenn die heruntergeladene Rollenkomponente eine Initiatorrollenkomponente (21) ist,
Durchführen einer Versionsprüfung der heruntergeladenen Initiatorrollenkomponente (21) für den Serviceverbraucheragenten (63); und,
wenn die heruntergeladene Rollenkomponente keine Initiatorrollenkomponente (21) ist,
Lokalisieren eines Vermittleragenten (62), der eine Initiatorrollenkomponente (21) aufweist, um es dem Serviceverbraucheragenten (63) zu ermöglichen, den Service von einem Serviceprovideragenten (61) anzufordern;
Herunterladen der Initiatorrollenkomponente (21) aus dem Vermittleragenten (62) in den Serviceverbraucheragenten (63);
Verpacken zumindest einer heruntergeladenen Initiatorrollenkomponente (21) in einen lokalen Komponentenspeicher; und
Instanziieren der heruntergeladenen Initiatorrollenkomponente (21), wobei der Serviceprovideragent (61) von der Initiatorrollenkomponente (21) identifiziert wird, wenn der Serviceverbraucheragent (63) sie ausführt, um ein Serviceergebnis zu erhalten.

14. Vermittleragent (62), der dazu angeordnet ist, zwischen einem Serviceverbraucheragenten (63) und zumindest einem Serviceprovideragenten (61) in einem Mehragentsystem zu vermitteln, wobei der Vermittleragent (62) dazu angeordnet ist, eine oder mehrere Rollenkomponenten (21, 22) zu identifizieren, die von einer Servicekomponente (1) des Mehragentsystems bereitgestellt werden, das es dem Serviceverbraucheragent (63) ermöglicht, einen Service von zumindest einem Serviceprovideragenten (61) im Mehragentsystem anzufordern, wobei der Vermittleragent (62) umfasst:
Mittel, um dem Serviceverbraucheragenten (63) die eine oder mehreren identifizierten Rollenkomponenten (21) bereitzustellen,
wobei der Serviceverbraucheragent (63), sobald die Rollenkomponente (21) in den Serviceverbraucheragenten (63) geladen ist, mit Information versorgt wird, die es ermöglicht, dass der angeforderte Service vom Serviceprovideragenten (61) bereitgestellt wird,
wobei zumindest eine vom Vermittleragenten (62) bereitgestellte Rollenkomponente eine Initiatorrollenkomponente (21) ist, die zuvor vom Serviceprovideragenten (61) beim Vermittleragenten (62) registriert worden ist, und wobei der Serviceprovideragent (61), sobald die Initiatorrollenkomponente (21) aus dem Vermittleragenten (62) geladen worden ist, von der Initiatorrollenkomponente (21) identifiziert wird, wenn der Serviceverbraucheragent (63) sie ausführt, um ein Serviceergebnis zu erhalten, und der Serviceverbraucheragent (63) dann imstande ist, den Service direkt vom Serviceprovideragenten (61) anzufordern.

15. Kommunikationsnetz mit einer verteilten Computerumgebung, die dazu ausgelegt ist, das Verfahren nach Anspruch 11 durchzuführen.

16. Computerprodukt mit einer Folge von einem oder mehreren Computerprogrammen, die auf einem computerlesbaren Datenträger vorgesehen sind, wobei das eine oder die mehreren Computerprogramme, wenn sie ausgeführt werden, das Verfahren nach irgendeinem der Ansprüche 11 bis 13 durchführen.

17. Signal, das eine Folge von einem oder mehreren Computerprogrammen über ein Kommunikationsnetz befördert, wobei die Folge von einem oder mehreren Computerprogrammen, wenn sie ausgeführt werden, das Verfahren nach irgendeinem der Ansprüche 11 bis 13 durchführen.

## Revendications

1. Système à agents multiples, comprenant des agents (61, 62, 63) ayant des rôles prédéfinis de médiateur de service, de consommateur de services et de fournisseur de services, et au moins un composant de service (1) permettant à un agent consommateur de service (63) dudit système à agents multiples d'interagir avec un agent fournisseur de service (61) lors de la requête d'un service, le composant de service (1) comprenant :
une pluralité de composants de rôle (21, 22), agencés pour accomplir une interaction de service entre l'agent consommateur de service (63) et ledit agent fournisseur de service (61), au moins l'un de ladite pluralité de composants de rôle comprenant un composant de rôle initiateur (21), préalablement enregistré par l'agent fournisseur de service (61) avec un agent médiateur de service (62) et agencé pour être chargé sur ledit agent consommateur de service (63) et au moins l'un de ladite pluralité de composants de rôle comprenant un composant de rôle répondant (22), agencé pour être chargé sur l'agent fournisseur de service (61), de la manière appropriée pour l'interaction avec ledit agent consommateur de service (63), les composants de rôle (21, 23) chargés étant agencés pour fournir aux agents consommateurs de service et fournisseurs de service (63, 61) de l'information sur une ou plusieurs exigence d'interaction, de manière à permettre au service requis d'être fourni,
dans lequel ledit composant de rôle initiateur (21) est chargé par ledit agent consommateur de service (63) à partir d'un agent médiateur (62) identifié par l'utilisation d'une description du composant de service (1), l'agent médiateur (62) fournissant dynamiquement le rôle initiateur à l'agent consommateur de service (63), de manière que, une fois d'un composant de rôle initiateur est chargé à partir de l'agent médiateur (62), l'agent consommateur de service (63) est directement en mesure de demander le service auprès d'un agent fournisseur de service (61) disponible, identifié par le composant de rôle initiateur (21) ayant été téléchargé, lorsque l'agent consommateur de service (63) l'exécute pour obtenir un résultat de service.

2. Système à agents multiples selon la revendication 1, dans lequel au moins l'un desdits composants de rôle (21, 22) est attaché à une description de composant incluant des détails de la capacité minimale de plateforme client de l'agent consommateur de service (63) et les interfaces utilisées par l'agent consommateur de service (63) pour interagir avec le composant de rôle (21, 22).

3. Système à agents multiples selon l'une quelconque des revendications précédentes, dans lequel ledit composant de rôle initiateur (21) commande son état propre.

4. Système à agents multiples selon l'une quelconque des revendications précédentes, dans lequel ledit composant de rôle initiateur (21) est réutilisé pour de multiples requêtes.

5. Système à agents multiples selon l'une quelconque des revendications précédentes, dans lequel chacun de la pluralité des composants de rôle (21, 22) est distribué par ledit agent médiateur (62).

6. Système à agents multiples selon la revendication 5, dans lequel l'agent médiateur (62) fournit chacun de la pluralité de composants de rôle (21, 22), dynamiquement, au client et aux agents fournisseurs de service (63, 61), et sélectionne chacun de ladite pluralité de composants de rôle (21, 22) pour une distribution, en utilisant ladite description de service et ladite description de composant du composant de rôle (21, 22).

7. Système à agents multiples selon l'une quelconque des revendications précédentes, dans lequel ledit composant de rôle initiateur (21) est fourni dynamiquement à l'agent consommateur de service (63), tandis que l'agent consommateur de service (63) fonctionne.

8. Système à agents multiples selon l'une quelconque des revendications précédentes, dans lequel ledit composant de rôle répondant (22) est fourni dynamiquement à l'agent fournisseur de service (61), tandis que l'agent fournisseur de service (61) fonctionne.

9. Système à agents multiples selon l'une quelconque des revendications précédentes, présentant une structure de données comprenant une information de Protocole d'Interaction (10) et une information comprenant un jeu de composants (21, 22) ayant trait à une ou plusieurs machines à états finis, dons les rôles sont définis dans le Protocole d'Interaction, le composant de service (1) étant agencé pour faire interface avec un ou plusieurs agents (61, 63), pour fournir une information de composant de rôle, sélectionnée parmi ledit jeu de composants, qui permet auxdits un ou plusieurs agents (61, 63) d'accomplir une interaction avec un ou plusieurs autres agents (61, 63) selon ledit Protocole d'Interaction (10).

10. Système à agents multiples selon la revendication 1, comprenant en outre une architecture, pour installer dynamiquement et exécuter la pluralité de composants de rôle (21, 22), l'architecture comprenant un contrôleur de coordinateur (71) ; un gestionnaire de charge (72) ; un installateur de composant (73) et un gestionnaire de paquets (74).

11. Procédé de fourniture d'un ou plusieurs composants de rôle (21, 22) à un agent logiciel (61, 63) participant ou cherchant à participer, à titre d'agent consommateur de service (63), dans une interaction inter-agents dans une architecture de système à agents multiples, le procédé comprenant les étapes consistant à :
faire que ledit agent consommateur de service (63) demande un service auprès d'un agent fournisseur de service (61);
faire que ledit agent consommateur de service (63) identifie, dans le système à agents multiples, un agent médiateur (62) qui soit capable de fournir au moins un composant de rôle (21), déterminé par l'agent médiateur (62) pour être utilisé par un composant de service (1) pour fournir un moyen d'interaction entre ledit agent consommateur de service (63) et ledit agent fournisseur de service (61), dans lequel ledit composant de service (1) est requis par l'agent consommateur de service (63) pour recevoir le service demandé,
dans lequel l'agent médiateur (62) est identifié par concordance d'une description de composant de service antérieurement enregistrée avec ledit agent médiateur, par un agent fournisseur de service (61), avec une description de service pour le service requis, qui est contenue dans un message envoyé par l'agent consommateur de service (63) à l'agent médiateur (62) ;
installer dynamiquement le au moins un composant de rôle (21) fourni par l'gent médiateur (62) sur l'agent consommateur de service (63) ; et
charger le au moins un composant de rôle sur l'agent consommateur de service (63), pour permettre à l'agent consommateur de service (63) de participer dans l'interaction inter-agents,
dans lequel ledit au moins un composant de rôle (21) est un composant de rôle initiateur (21) qui, lorsqu'il est chargé par ledit agent consommateur de service (63) à partir dudit agent médiateur (62), permet à l'agent consommateur de service (63) de directement ledit service auprès dudit agent fournisseur de service (61), identifié par le composant de rôle initiateur (21) téléchargé, lorsque l'agent consommateur de service (63) l'exécute, pour obtenir un résultat de service.

12. Procédé selon la revendication 11, dans lequel le procédé est mis en oeuvre dynamiquement, tandis que l'agent consommateur de service (63) participe dans l'interaction inter-agents.

13. Procédé de gestion de composant de rôle d'agent logiciel, dans lequel au moins un composant de rôle (21, 22) est nécessaire pour une interaction inter-agents entre un agent consommateur de service (63) et un agent fournisseur de service (61) dans un système à agents multiples, le procédé comprenant les étapes consistant à :
lorsqu'un agent consommateur de service (63) demande un service impliquant une interaction inter-agents,
déterminer si un ou plusieurs composants de rôle (21), requis pour ladite interaction inter-agents, sont stockés sous une forme téléchargée dans un élément de stockage de composant local ; et
si un composant de rôle téléchargé est trouvé dans ledit élément de stockage de composant local, déterminer si le composant de rôle téléchargé est un composant de rôle initiateur (21) requis pour l'agent consommateur de service (63), pour demander ledit service auprès dudit agent fournisseur de service (61) ; et
si le composant de rôle téléchargé est un composant de rôle initiateur (21), vérifier la version du composant de rôle initiateur (21) téléchargé pour ledit agent consommateur de service (63) ; et
si le composant de rôle téléchargé n'est pas un composant de rôle initiateur (21),
localiser un agent médiateur (62) ayant un composant de rôle initiateur (21), pour permettre à l'agent consommateur de service (63) de demander ledit service auprès d'un agent fournisseur de service (61) ;
télécharger ledit composant de rôle initiateur (21) à partir de l'agent médiateur (62), audit agent consommateur de service (63) ;
encapsuler au moins un composant de rôle initiateur (21) téléchargé dans un stockage de composant local ; et
instancier le composant de rôle initiateur (21) téléchargé, dans lequel ledit agent fournisseur de service (61) est identifié par ledit composant de rôle initiateur (21), lorsque l'agent consommateur de service (63) l'exécute, pour obtenir un résultat de service.

14. Agent médiateur (62), agencé pour opérer une médiation entre un agent consommateur de service (63) et au moins un agent fournisseur de service (61) dans un système à agents multiples, l'agent médiateur (62) étant agencé pour identifier un ou plusieurs composants de rôle (21, 22) fournis par un composant de service (1) du système à agents multiples, allant permettre audit agent consommateur de service (63) de demander un service auprès du au moins un agent fournisseur de service (61) dans le système à agents multiples, l'agent médiateur (62) comprenant :
des moyens pour fournir lesdits un ou plusieurs composants de rôle (21) identifiés à l'agent consommateur de service (63),
dans lequel, une fois que le composant de rôle (21) est chargé sur l'agent consommateur de service (63), l'agent consommateur de service (63) est muni d'une information permettant au service requis d'être fourni par l'agent fournisseur de service (61),
dans lequel au moins un composant de rôle, fourni par l'agent médiateur (62), est un composant de rôle initiateur (21), antérieurement enregistré avec ledit agent médiateur (62) par ledit agent fournisseur de service (61), et dans lequel, une fois que ledit composant de rôle initiateur (21) a été chargé à partir dudit agent médiateur (62), ledit agent fournisseur de service (61) est identifié par ledit composant de rôle initiateur (21), lorsque l'agent consommateur de service (63) l'exécute, pour obtenir un résultat de service, et l'agent consommateur de service (63) est ensuite en mesure de demander directement ledit service auprès dudit agent fournisseur de service (61).

15. Réseau de communication, comprenant un environnement informatique distribué, adapté pour mettre en oeuvre le procédé de la revendication 11.

16. Produit informatique, comprenant une suite d'un ou plusieurs programmes informatiques, fournis sur un support de données lisible par ordinateur, les un ou plusieurs programmes informatiques, lorsqu'ils sont exécutés, mettant en oeuvre le procédé tel que défini selon l'une quelconque des revendications 11 à 13.

17. Signal, véhiculant une suite d'un ou plusieurs programmes informatiques sur un réseau de communication, la suite d'un ou plusieurs programmes informatiques, lorsqu'elle est exécutée, mettant en oeuvre le procédé tel que défini selon l'une quelconque des revendications 11 à 13.
